# EUROPÄISCHE PATENTSCHRIFT

(11) **EP 1 741 685 B1**
(45) Veröffentlichungstag und Bekanntmachung des Hinweises auf die Patenterteilung: **30.04.2014**
(21) Anmeldenummer: 05014531.7
(22) Anmeldetag: 05.07.2005
(51) Int. Cl.: C04B 35/573, C04B 38/00, F01N 3/022, B01D 53/94, B01D 46/24

(54) **Poröser beta-SiC-haltiger keramischer Formkörper und Verfahren zu dessen Herstellung.**
Porous beta-SiC containing shaped ceramic body and method of making it.
Corps formé céramique poreux contenant beta-SiC et son procédé de préparation.

(43) Veröffentlichungstag der Anmeldung: 10.01.2007
(73) Patentinhaber: MANN+HUMMEL Innenraumfilter GmbH & Co. KG, 95482 Gefrees (DE)
(72) Erfinder: Weisensel, Lars, 63867 Johannesberg (DE); Greil, Peter, 91085 Weisendorf (DE); Sieber, Heino, 91085 Weisendorf (DE); Thomas Wolff, 95213 Münchberg (DE)
(74) Vertreter: Walcher, Armin

(56) Entgegenhaltungen:
- EP-A- 1 544 184
- WO-A1-00/01463
- US-A- 4 514 346
- US-A- 5 474 587
- US-A1- 2002 011 683
- US-A1- 2003 012 938
- US-B1- 6 582 796
- GREIL P ET AL: "Biomorphic Cellular Silicon Carbide Ceramics from Wood: I. Processing and Microstructure" JOURNAL OF THE EUROPEAN CERAMIC SOCIETY, ELSEVIER SCIENCE PUBLISHERS, BARKING, ESSEX, GB, Bd. 18, Nr. 14, Dezember 1998 (1998-12), Seiten 1961-1973, XP004144406 ISSN: 0955-2219
- MORANCAIS A ET AL: "High porosity SiC ceramics prepared via a process involving an SHS stage" JOURNAL OF THE EUROPEAN CERAMIC SOCIETY, ELSEVIER SCIENCE PUBLISHERS, BARKING, ESSEX, GB, Bd. 23, Nr. 11, Oktober 2003 (2003-10), Seiten 1949-1956, XP004424291 ISSN: 0955-2219
- QIAN JUN-MIN ET AL: "Preparation and properties of porous microcellular SiC ceramics by reactive infiltration of Si vapor into carbonized basswood" MATER CHEM PHYS; MATERIALS CHEMISTRY AND PHYSICS DEC 20 2003, Bd. 82, Nr. 3, 20. Dezember 2003 (2003-12-20), Seiten 648-653, XP002341886

## Beschreibung

Die Erfindung betrifft einen porösen β-SiC-haltigen keramischen Formkörper und ein Verfahren zu dessen Herstellung.

SiC-basierende Materialien werden für eine Vielzahl von unterschiedlichen Anwendungen, insbesondere dort wo hohe Stabilität bei hohen Temperaturen oder hohe Korrosionsbeständigkeiten gefordert werden, eingesetzt. Hochporöse, und damit auch leicht gewichtige, SiC-basierende Keramiken werden im zunehmenden Maße als Katalysatorträger, Brennhilfsmittel, Isolationsmaterialien, Substratmaterialien oder zur Gaserhitzung in Porenbrennern oder für Solaranlagen sowie zur Abgasreinigung bei hohen Temperaturen als Filtermaterialien benötigt.

In den vergangenen Jahrzehnten wurden mehrfach Verfahren beschrieben, die sich mit der Silizierung von Halbzeugformteilen unterschiedlicher Zusammensetzung von Kohlenstoff, SiC und Si beziehen. Neben der Silizierung von Fasergelegen unterschiedlicher Webart und unterschiedlichen Webaufbaus wurde auch die pulvertechnologische Route beschrieben (W.B. Hillig "Melt Infiltration Approach to Ceramic Matrix Composites" J.Am. Ceram. Soc. 71 (1988) C96-C99, E. Fitzner und R. Gadow, "Fiber-Reinforced Silicon Carbide", Am. Cer. Soc. Bull. 65 (1986) 326).

DE 197 11 831 A1 beschreibt ein Verfahren, bei dem auf der Basis von SiC und Kohlenstoff eine dichte, kohlenstofffaserverstärkte Verbundkeramik zur Verwendung als Bremsscheibe hergestellt wird, die anschließend mit Si-infiltriert wird und siliziert wird.

Die oben beschriebenen Verfahren, bei denen unterschiedliche Halbzeugmaterialien zur Si-Infiltration verwendet werden, erfolgt eine Prozeßführung, bei der die Halbzeugmaterialien aus Si-, SiC- und C-Pulvern oder aus den entsprechenden Fasern hergestellt und dann mittels einer Si-Schmelze siliziert werden. Nach der Silizierung entstehen nahezu dichte Bauteile aus SiC oder SiC/C-Keramik. Diese Verfahren sind jedoch nicht für die Herstellung von porösen SiC-basierenden Bauteilen geeignet.

Neben der Herstellung von dichten SiSiC-Keramiken wurden in den vergangenen Jahren ebenfalls unterschiedliche Verfahren zur Herstellung poröser SiC-Keramiken insbesondere über die pulvertechnologische Route auf der Basis von SiC-Pulvern beschrieben (DE 197 27 115 A1 - Poröse SiC-Keramik und Verfahren zu ihrer Herstellung auf der Basis von SiC, DE 40 25 239 C1 - Verfahren zur Herstellung von Formkörpern aus Si-infiltriertem Siliziumcarbid oder Siliziumcarbid und Kohlenstoff, DE 37 19 606 C2 - Verfahren zur Silizierung von porösen Formkörpern aus SiC und Kohlenstoff durch Einwirken von elementarem Silizium, DE 694 293 23 T2/EP 0 657 403 B1 - Poröses keramisches Material und Verfahren zu seiner Herstellung ausgehend von Siliziumcarbid und Keramikpulver).

Zur Herstellung von porösen, extrudierten Formkörpern aus SiC gibt es drei unterschiedlichen Verfahrensarten.

Zum einen werden Formkörper aus den entsprechenden SiC-Pulvern mit unterschiedlichen Zusätzen extrudiert und anschließend gesintert. Das Sintern der SiC-Grünkörper erfolgt dabei bei sehr hohen Temperaturen über 2000 °C, die für eine Rekristallisation des SiC und damit zur Bildung einer stabilen, porösen SiC-Struktur notwendig sind (US 4,777,152).

Die WO 93/13303 beschreibt die Herstellung von Formkörpern aus SiC-Pulver, bei denen ebenfalls Rekristallisationstemperaturen von über 2000 °C benötigt werden. Durch die sehr hohe Härte der α-SiC-Partikel sind jedoch die Extrusionsmundstücke einem sehr hohen Verschleiß unterworfen, was das Verfahren kostenintensiv gestaltet. Ein weiterer noch höherer Kostenfaktor ist jedoch das Rekristallisieren bei über 2000 °C. Neben dem enormen Energieverbrauch machen sich auch die hohen Wartungskosten für den Ofen bemerkbar, da der Verschleiß der Graphitheizer bei Temperaturen oberhalb von 1800 °C exponentiell zunimmt.

Bei den oben genannten Verfahren wird bei über 2000°C eine Rekristallisation des SiC durchgeführt, um eine gewünschte Porenverteilung und eine notwendige Festigkeit zu erreichen. Bei diesen Temperaturen wandelt sich β-SiC in α-SiC um. α-SiC besitzt im Einzelkorn eine höhere Festigkeit als β-SiC, weshalb diese Modifikation auch als Schleifmittel verwendet wird. In den porösen Filterstrukturen kommt es jedoch nicht so sehr auf die Festigkeit des Einzelkorns, sondern vielmehr auf die Festigkeit der gesamten porösen Struktur an, d.h. auf die Bindung der SiC-Partikel untereinander und auf die Porengröße und die Porosität.

Der zweite in verschiedenen Anwendungen beschriebene Weg geht über die Ausgangsstoffe Silizium und Kohlenstoff, wobei der Kohlenstoff selbst teilweise aus Vorläufern (precursor) mittels Pyrolyse gewonnen wird. Die WO 01/98207 beschreibt das Mischen von metallischem Silizium mit einem pyrolysierbaren Polymer (bspw. ein Phenolharz), das nach der Pyrolyse bei Temperaturen zwischen 1400 °C und 1800 °C in SiC umgewandelt wird. EP 0 796 830 B1 beschreibt die Extrusion einer Mischung aus metallischem Silizium mit graphitischem Kohlenstoff und anschließender Bildung von SiC, das bei Temperaturen zwischen 2000 °C und 2300 °C zur Erzeugung einer geeigneten Porengröße rekristallisiert werden muss.

Als dritten Weg beschreibt US 6,582,796 die Mischung von SiC-Pulver mit einem keramischen Binder. Das SiC wird mit oxidkeramischen Bestandteilen vermischt und extrudiert und anschließend bei Temperaturen von 1600 °C unter oxidierender Atmosphäre gebrannt. Auch hier befindet sich SiC in der Ausgangsmasse, die extrudiert wird, was zu einem sehr hohen Abrieb und Verschleiß am Extrusionswerkzeug führt.

Die US 200210011683 A1 offenbart einen Siliciumcarbid-Wabenkörper. Die US 6,582,796 B1 offenbart einen keramischen monolithischen Wabenkörper. Die US 5,474,587 offenbart einen porösen, fluidpermeablen Siliciumcarbid-Körper.

Die EP 1 544 184 A1 offenbart ein wärmebeständiges Siliciumcarbid-basiertes poröses Baumaterial sowie ein Verfahren zu dessen Herstellung.

Die WO 00/01463 A1 offenbart einen Dieselrußgasfilter, der einen porösen Formkörper aufweist.

Aufgabe der Erfindung ist es, ein verbessertes Verfahren zur Herstellung von porösen Keramiken auf SiC-Basis bereitzustellen, bei dem der Energieaufwand geringer ist und der Verschleiß und Abrieb an den Formwerkzeugen verringert wird.

Eine weitere Aufgabe ist es, einen porösen keramischen Formkörper auf SiC-Basis mit definierbarer Porenstruktur und ausreichender Porosität und Feinzelligkeit (Kanaldichte) bereitzustellen, der geeignet ist, besonders effektiv Feinstaub zurückzuhalten und eine hervorragende Temperaturbeständigkeit, chemische und mechanische Beständigkeit aufweist.

Die der Erfindung zugrundeliegende Aufgabe wird durch Bereitstellen eines Verfahrens zur Herstellung eines porösen β-SiC-haltigen keramischen Formkörpers gemäß Anspruch 1 gelöst:

Das erfindungsgemäße Verfahren ermöglicht die Herstellung eines β-SiC-haltigen Formkörpers bei niedrigen Temperaturen und ohne Rekristallisationsschritt, wodurch der Energieaufwand abgesenkt wird.

Bevorzugte Weiterbildungen des Verfahrens zur Herstellung von hochporösen keramischen Formkörpern sind in den Unteransprüchen 2 bis 18 angegeben.

Vorzugsweise umfasst die Masse aus der der poröse Silizium- und Kohlenstoffhaltige Formkörper bereitgestellt wird, Silizium-haltige Partikel mit einer Korngröße aus einem Bereich von 0,001 bis 100 µm und/oder Kohlenstoff-haltige Partikel mit einer Korngröße aus einem Bereich von 0,001 bis 50 µm.

Vorzugsweise wird bei einer Temperatur in einem Bereich von 1420 bis 1700°C siliziert, falls Silizium ohne Zusatz weiterer Metalle verwendet wird. Vorzugsweise wird bei einer Temperatur in dem Bereich von 1150 bis 1500°C siliziert, falls Silizium zusammen mit weiteren Metallen unter Ausbildung von Silizium-Metall-Legierungen verwendet wird. Vorzugsweise findet die Silizierung unter Vakuum oder unter Argonatmosphäre statt. Durch die Silizierung unter Sauerstoffausschluss wird die Bildung von SiO₂ und/oder SiO weitgehend verhindert. Dies führt zu besonders säure- und aschebeständigen SiC-Strukturen.

Vorzugsweise weist der in dem erfindungsgemäßen Verfahren verwendete Kohlenstoff-haltige Partikel eine innere Oberfläche von mindestens 350 m²/g nach BET auf. Das Verfahren zur Bestimmung des BET-Werts wird gemäß dem von Brunauer, Emmet und Teller im Journal of American Chemical Society, Band 60, 1938, Seite 309 beschriebenen Verfahren durchgeführt. Weiter bevorzugt beträgt die innere Oberfläche der Kohlenstoff-haltigen Partikel weniger als 1000m²/g, weiter bevorzugt weniger als 800 m²/g.

Vorzugsweise liegen die Silizium- und Kohlenstoff-haltigen Partikel zu 80 Gew.-%, vorzugsweise zu Gew.-90%, besonders bevorzugt zu Gew.-100%, bezogen auf das Gesamtgewicht des porösen Formkörpers, nicht als Agglomerate und/oder nicht als Granulate vor, wobei sich diese Werte auf das Gesamtgewicht der Silizium- und Kohlenstoff-haltigen Partikel beziehen. Der Kohlenstoff- und Silizium-haltige Formkörper enthält vor der Silizierung vorzugsweise kein SiC.

Erfindungsgemäß kann festgestellt werden, dass die Porenverteilung sich bereits direkt im Porenbildungsprozess einstellt, ohne dass eine Rekristallisation notwendig ist. Der erfindungsgemäße poröse β-SiC-haltige Formkörper wird somit direkt aus den Ausgangsstoffen erhalten, d.h. die Ausgangsstoffe setzen sich zu einem porösen Gefüge mit β-SiC um. Da die Temperaturen für diesen Prozess unterhalb von 1900°C liegen, liegt der poröse Formkörper überwiegend in der β-Phase vor. Ferner stellt das erfindungsgemäße Verfahren ein sehr energie-effizientes Verfahren dar, da die Temperaturen unter 1900°C liegen und kein Rekristallisationsschritt notwendig ist. Vorzugsweise besteht das in dem erfindungsgemäßen porösen β -SiC-haltige Formkörper enthaltenen β-SiC zu 90 Gew.-%, vorzugsweise zu 95 %, weiter bevorzugt zu 98 Gew.-% besonders bevorzugt zu 100% aus β-SiC (kubische Kristallform des SiC). Diese Wertangaben beziehen sich auf SiC ohne Legierungselemente. β-SiC bildet sich bei Temperaturen zwischen 1450 und 1900 °C aus Silizium und Kohlenstoff.

Unter dem Begriff "Silizium-haltig" im Sinne der Erfindung werden Stoffe verstanden, die elementares Silizium oder Siliziumverbindungen umfassen, jedoch vorzugsweise kein Siliziumcarbid enthalten. Als elementares Silizium kann jede Si-Modifikation, beispielsweise α, β, δ oder γ-Silizium verwendet werden. Es können organische und/oder anorganische Siliziumverbindungen verwendet werden. Als organische Siliziumverbindungen werden vorzugsweise Polymere verwendet, die Si in ihren Grundstruktureinheiten enthalten, wie beispielsweise Siloxane, Silsesquioxane, Polysilane, Polysiloxane oder Siliziumsole, wie beispielsweise Tetraethoxysilan (TEOS). Als anorganische Siliziumverbindungen werden vorzugsweise Silizide, beispielsweise TiS₂,CrSi₂, FeSi und/oder FeSi₂, verwendet.

Unter dem Begriff "Kohlenstoff-haltig" im Sinne der Erfindung werden vorzugsweise Stoffe verstanden, die Kohlenstoff in der Graphitmodifikation enthalten oder umfassen.

Vorzugsweise werden Kohlenstoffe verwendet, deren mikrokristalline Bereiche eine poröse Struktur aufbauen, wie es beispielsweise bei Aktivkoks und Aktivkohle der Fall ist. Unter Aktivkoks im Sinne der Erfindung wird eine Kohlenstoff-haltige Substanz verstanden, die nach der Carbonisierung aus dem Rohstoff bereits eine innere Oberfläche aufweist. Die Carbonisierung, welche auch als Verkokung bezeichnet wird, von bestimmten Ausgangsstoffen wie zum Beispiel der makroporöse Polymeradsorber Ambersorb 600^{®} von RohmHaas, führt bereits ohne weitere Aktivierung zu inneren Oberflächen von 500 bis 600 m²/g.

Kohlenstoffe, deren mikrokristalline Bereiche eine poröse Struktur aufbauen, sind besonders geeignet, um durch Infiltration mit Silizium in SiC umgewandelt zu werden. Die mikroporösen Strukturen beispielsweise einer Aktivkohle, sind besonders gut zugänglich für das Silizium, wenn das Silizium als Schmelze vorliegt. So bildet sich über der Schmelze eine Dampfphase des Siliziums und dieser Siliziumdampf diffundiert in die Poren der Aktivkohle und setzt sich dort zu SiC um. Hierdurch wird eine besonders gute Reaktivität bei der Umsetzung des Kohlenstoff-haltigen Formkörpers mit dem Silizium bei einer besonders hohen inneren Oberfläche des Kohlenstoffs erhalten.

Vorzugsweise werden die Kohlenstoff-haltigen Partikel (welche nachstehend auch als pulverförmige Kohlenstoffe bezeichnet werden) aus der Gruppe, bestehend aus Aktivkohle, Koks, Kohle, Ruß, Graphit, pyrolysiertem Harz und Mischungen davon, ausgewählt. Besonders bevorzugt wird Aktivkohle verwendet. Aktivkohle besitzt aufgrund ihrer mikrokristallinen Struktur die Eigenschaft, sich besonders gut mit Silizium oder Silizium-haltigen Substanzen zu SiC umzusetzen. Vorzugsweise erfolgt die Umsetzung von Silizium und dem Kohlenstoff-haltigen Material, bevorzugt Aktivkohle, bei Temperaturen oberhalb des Schmelzpunktes von Silizium. Besonders bevorzugt erfolgt die Umsetzung von Silizium und/oder dem Silizium-haltigen Material mit Aktivkohle, die über pyrolysiertes Harz gebunden ist.

Die pulverförmigen Kohlenstoffe aus der Gruppe, bestehend aus Aktivkohle, Koks, Kohle, Ruß, Graphit, pyrolysiertem Harz und Mischungen davon, können beispielsweise aus Ausgangsmaterialien wie Holz, Fruchtkerne, Fruchtschalen, Pech oder Teer hergestellt werden. Als pulverförmige Kohlenstoffe sind allgemein biomorphe Kohlenstoffe, d.h. Kohlenstoffe, die durch Pyrolyse von biomorphen Material, wie Holz, Fruchtkernen und Fruchtschalen erhalten werden, bevorzugt.

Biomorphe Kohlenstoffe lassen sich mit Silizium besonders gut zu SiC umsetzen, da sie zum großen Teil mikrokristalline Bereiche aufweisen.

Kohlenstoff ordnet sich im Graphit in der hexagonalen Struktur in übereinander liegenden Ebenen an. In rein kristallinem Graphit sind diese Ebenen parallel zueinander angeordnet und es gibt keine ungeordneten Bereiche. In teilkristallinem Kohlenstoff, wie beispielsweise Aktivkohle, gibt es große Bereiche, in denen die Graphitebenen ungeordnet zueinander vorliegen. Dies sind die amorphen Bereiche. In diesen amorphen Bereichen gibt es kleine Bereiche, in denen drei bis vier Graphitebenen parallel zueinander vorliegen. Diese Bereiche nennt man mikrokristalline Bereiche. Unter dem Begriff "mikrokristalline Bereiche" sind also kleinere Bereiche zu verstehen, in denen drei bis vier Graphitebenen parallel zueinander vorliegen.

Vorzugsweise wird der biomorphe Kohlenstoff durch eine Säurewäsche gereinigt. Hierdurch werden mineralische Bestandteile, die beim Verkokungsprozess zurückbleiben können, weitgehend herausgewaschen. Weiterhin werden metallische Verunreinigungen, wie zum Beispiel Kalium, Natrium und Calcium, entfernt. Diese metallischen Verunreinigungen werden bei der Umsetzung mit flüssigem Silizium in diesem lokal gelöst und setzen lokal die Reaktivität der Si-Schmelze herab. Dies kann zum Abbruch der Umsetzungsreaktion führen. Als Säuren eigenen sich beispielsweise Salzsäure und/oder Phosphorsäure, vorzugsweise in einem Konzentrationsbereich von 5 bis 10 Gew.-% bezogen auf das Gesamtgewicht der Säurelösung.

Unter dem Begriff "Silizieren" im Sinne der Erfindung wird die Umsetzung von Silizium- und Kohlenstoff-haltigen Verbindungen zu SiC verstanden.

Unter dem Begriff "verkokbar" im Sinne der Erfindung werden Stoffe verstanden, bei denen beim Erhitzen über 500°C unter inerter Atmosphäre ein Rückstand zurückbleibt, der mindestens zu 85 Gew.-% aus Kohlenstoff, vorzugsweise zu mindestens 95 Gew.-%, bezogen auf das Gesamtgewicht des Rückstandes, aus Kohlenstoff besteht.

Unter dem Begriff "Bindemittel" werden im Sinne der Erfindung Stoffe verstanden, die beim Vermischen mit den Silizium- und Kohlenstoff-haltigen Verbindungen eine Masse bilden, aus der ein Silizium- und Kohlenstoff-haltigen Formkörper gebildet werden kann.

Als Bindemittel werden vorzugsweise organische Harze verwendet. Besonders bevorzugt sind carbonisierbare Harze. Carbonisierbare Harze sind Harze, welche verkokbar sind. Dabei sind Harze mit aromatischen Kernen und Epoxydharze besonders bevorzugt. Als sehr geeignet haben sich Phenolharze erwiesen. Vorzugsweise wird ein pulverförmiges Phenolharz wie Novolak verwendet. Novolake wirken zum einen für die Kohlepartikel als Binder, zum anderen setzen sie sich, da sie durch die Pyrolyse in einen sogenannten Glaskohlenstoff umgewandelt werden, ebenfalls mit freiem Silizium zu SiC um. Die Verwendung eines carbonisierbaren Harzes ist vorteilhaft für die Stabilität nach der Entbinderung und für die Stabilität im porösen Formkörper. Unter "Entbinderung" wird die pyrolytische Zersetzung der Bindemittel und anderer Hilfsstoffe verstanden, welche auch als Verkokungsprozess oder Carbonisierungsprozess bezeichnet werden kann. Ohne das carbonisierbare Harz liegen die Silizium- und Kohlenstoffpartikel nur in einem sehr schwach gebundenen Gerüst in dem Formkörper vor. Durch die Verwendung von carbonisierbarem Harz sind die Kohlenstoffpartikel und die Siliziumpartikel nach der Entbinderung über das carbonisierte Harz in einem stabilen Formkörper gebunden. Die Bindung der Kohlenstoffpartikel über den carbonisierten Harz führt weiterhin zu einer Verbesserung der Stabilität der durch den Silizierprozess entstehenden SiC-Struktur. Die Bindung zwischen den SiC-Kristallen in der porösen Struktur wird bereits durch die Silizium- und Kohlenstoff-haltige Struktur vorgeprägt.

Die Porosität des β-SiC-haltigen keramischen Formkörpers kann äußerst vorteilhaft über die Partikelgröße der zur Herstellung des Silizium- und Kohlenstoff-haltigen Formkörpers verwendeten Kohlenstoffmaterialien eingestellt werden. Bei Verwendung grober Ausgangspulver wird eine sehr grobporige Struktur bereits in der pyrolysierten Zwischenstufe erhalten, aus der dann durch die Aufschmelzung des Siliziums und Bildung von SiC eine entsprechende grobporige SiC-Struktur entsteht. Der Porenbildungsprozess läuft dabei folgendermaßen ab: Durch die Pyrolyse entsteht ein poröses Kohlenstoffgerüst, in dem die Si-Partikel eingebunden sind. Durch das Aufheizen über den Schmelzpunkt des Siliziums wird das Silizium flüssig und in das poröse Kohlenstoffgerüst eingesaugt. Vorzugsweise wird die Silizierung unter Vakuum oder unter inerter (sauerstofffreier) Atmosphäre, beispielsweise Argonatmosphäre durchgeführt. Die abgesaugte Schmelze hinterlässt Poren, die zuvor mit Siliziumpartikeln ausgefüllt waren. Nach der Bildung des β-SiC bleibt diese Porenstruktur bestehen. Demzufolge erhält man auch kleinere Poren bei der Verwendung einer kleineren Kornverteilung des Siliziums. Die Korngrößenverteilung wird nach der gewünschten Porenverteilung im porösen Formkörper ausgewählt.

Da die von dem Silizium- und Kohlenstoff-haltigen Formkörper vorgegebene Matrix oder Struktur siliziert wird, das heißt mit Silizium oder Silizium-haltigen Substanzen umgesetzt wird, wird die vorgegebene Matrix oder Struktur auf den β -SiC-haltigen Formkörper "übertragen". Somit kann auf überraschend einfache Art und Weise ein β-SiC-haltiger Formkörper mit vorgegebener oder definierter Porosität hergestellt werden.

Bei einer vorteilhaften Ausführungsform des erfindungsgemäßen Verfahrens wird zunächst eine Mischung von pulverförmigen Kohlenstoffen, pulverförmigem Silizium, d.h. Silizium-haltigen Partikeln, organischen Bindemitteln und einer Flüssigphase hergestellt, die nachfolgend unter Erhalt eines Silizium- und Kohlenstoff-haltigen Formkörpers extrudiert wird.

Bei einer Ausführungsform wird der Silizium- und Kohlenstoffhaltige Formkörper in eine Kanäle-haltige Struktur extrudiert, die aus einer Vielzahl von Kanälen besteht. Vorzugsweise weist die Kanäle-haltige Struktur sich entlang der Längsachse des Formkörpers erstreckende Kanäle auf, die wesentlichen parallel zueinander angeordnet sind. Der Querschnitt der Kanäle wird im allgemeinen auch als Zelle bezeichnet. Vorzugsweise weisen die Kanäle einen quadratischen oder polygonalen Querschnitt, beispielsweise hexagonalen oder octogonalen Querschnitt, auf. Besonders bevorzugt ist ein hexagonaler Querschnitt, da dieser beim Durchströmen mit gasförmigen und/oder flüssigen Stoffen einen geringeren Reibungswiderstand erzeugt. Vorzugsweise weist die Kanäle-haltige Struktur eine Kanaldichte von 50 bis 400 Kanälen/ inch², weiter bevorzugt von 180 bis 300 Kanälen /inch², besonders bevorzugt von 200 bis 300 Kanälen /inch² auf. Unter "Kanaldichte" gemäß der Erfindung wird die Zahl der Kanäle pro inch² senkrecht zur Längsachse der Kanäle in dem porösen Formkörper verstanden.

Da die Abscheidung von Rußpartikeln auf dem porösen β-SiC-haltige Formkörper, welcher insbesondere als Rußfilter für einen PKW ausgebildet ist, auf der Oberfläche erfolgt, sind besonders feinzellige (hohe Kanaldichte) Kanäle-haltige Strukturen sehr gut geeignet. Hierdurch wird bei großer Filteroberfläche ein geringer Druckabfall erreicht. Dies ist wichtig, da durch einen solchen Dieselrußfilter 10.000 l/min Gas durchgeführt werden müssen.

Die Kanalwandstärken sollten dabei bei dem porösem β-SiC -Formkörper so dünn wie möglich sein. Es musste ein Optimum zwischen mechanischer Festigkeit des gesamten Filters und der Kanalwandstärke gefunden werden. Weiterhin kommt bei der Kanalwandstärke noch hinzu, dass je nach eingesetztem Material nicht beliebig dünne Wände extrudieren lassen. Insbesondere der Einsatz von SiC in der Extrusionsmasse schränkt die Möglichkeiten zur Reduzierung der Wandstärken deutlich ein.

Bei einer bevorzugten Ausführungsform weisen die Kanalwände des extrudierten β -SiC-Formkörpers eine Wandstärke in dem Bereich von 100 µm bis 480 µm, vorzugsweise 150 bis 420 µm, bevorzugt 150 bis 400 µm, vorzugsweise 200 bis 380, noch weiter bevorzugt 220 bis 350 µm, auf.

Hierdurch wird eine ausreichende Stabilität bei einer deutlich vergrößerten Oberfläche erreicht, was die Herstellung von kleineren Filtern ermöglicht. Gerade für den Abgasbereich von Diesel-PKW ist es notwendig, Filter mit kleinerem Volumen bereitzustellen. Die Herstellung dünnerer Wandstärken wird erst durch das erfindungsgemäße Herstellungsverfahren ermöglicht, da kein SiC in der Ausgangsmasse vorliegt. Die Reduzierung der Wandstärke führt bereits bei einer Reduzierung der Wandstärke um 70 µm und bei gleichzeitiger Erhöhung der Kanaldichte zu einer deutlichen Erhöhung der Oberfläche des Filters bei gleichem Volumen. Durch die Kombination eines Filters mit vielen Kanälen/inch² und geringen Wandstärken wird eine deutlich erhöhte Filteroberfläche erreicht, die die Bereitstellung von kleineren Filtern bei gleichbleibender Oberfläche ermöglicht.

Es hat sich gezeigt, dass sich die Umsetzungsgeschwindigkeit des Kohlenstoffs und des Siliziums zu β-SiC über den Kristallinitätsgrad, die Porosität, die Porenverteilung und die Oberflächeneigenschaften der Kohle gesteuert werden kann.

Bei einer Ausführungsform weisen die Silizium-haltigen Partikel eine Korngröße aus einem Bereich von 0,001 bis 190 µm und/oder die Kohlenstoff-haltigen Partikel weisen eine Korngröße aus einem Bereich von 0,001 bis 150 µm auf. Bei einer bevorzugten Ausführungsform weisen die Silizium-haltigen Partikel eine Korngröße aus einem Bereich von 0,001 bis 75 µm und vorzugsweise einen d₅₀-Wert von 20 bis 30 µm auf und/oder die Kohlenstoff-haltigen Partikel weisen eine Korngröße aus einem Bereich von 0,001 bis 35 µm und vorzugsweise einen d₅₀-Wert von 8 bis 15 µm auf.

Beispielsweise werden für einen Formkörper mit Poren in einer mittleren Porengröße im Bereich von 10 bis 15 µm Kohlenstoff-haltige Partikel mit einer Korngröße im Bereich von 8 bis 15 µm oder einer Korngröße im Bereich von 10 bis 35 µm verwendet und es werden Silizium-haltige Partikel mit einer Partikelgröße im Bereich von 0,01 bis 75 µm und einem d₅₀-Wert von 20 bis 30 µm verwendet.

Der d₅₀-Wert gibt die Partikelgröße an, die für 50% aller Partikel die Obergrenze darstellt, d.h. d₅₀-Wert = 20µm bedeutet, dass 50% aller Partikel in dem Pulver des jeweiligen Stoffes kleiner als 20 µm sind.

Vorzugsweise enthält der in Schritt (b) bereitgestellte Silizium- und Kohlenstoffhaltige Formkörper ein Massenverhältnis von 2,33:1 bis 5:1 von Silizium zu Kohlenstoff. Bei Siliziumhaltigen Verbindungen bezieht sich diese Angabe nur auf den Massenanteil Silizium, der in der Silizium-haltigen Verbindung enthalten ist.

Als Flüssigphase werden vorzugsweise wässrige Lösungsmittelgemische, verwendet. Besonders bevorzugt wird Wasser verwendet.

Weiterhin werden der zu extrudierenden Mischung bevorzugt Extrusionshilfsmittel wie Plastifizierer, Wachse, Graphit und/oder Tenside, etc. zugesetzt. Diese Extrusionshilfsmittel bewirken eine verbesserte Gleitfähigkeit der Partikel zueinander und führen zu einer homogenen Verteilung sämtlicher Bestandteile während der Extrusion.

Der zu extrudierenden Mischung werden vorzugsweise auch Grünkörperbindemittel, beispielsweise Celluloseether oder Celluloseetherderivate, zugesetzt. Beispielsweise kann Methylhydroxypropylcellulose als Grünkörperbindemittel verwendet werden. Das Grünkörperbindemittel stabilisiert den nach der Extrusion erhaltenen Formkörper. Darüber hinaus fördert das Grünkörperbindemittel ebenfalls die Homogenisierung der verschiedenen Bestandteile des Gemisches während der Extrusion.

Bei einer bevorzugten Ausführungsform werden in die zu extrudierende Mischung auch Fasern eingearbeitet. Die Faser können beispielsweise Kohlenstofffasern und/oder Kurzfasern aus SiC, insbesondere Whisker, und/oder Polymerfasern sein, denen unterschiedliche Funktionen zukommen.

Unter dem Begriff "Whisker" im Sinne der Erfindung werden monokristalline Kurzfasern verstanden. Kurzfasern aus SiC können zur Verstärkung der SiC-Struktur eingesetzt werden. Vorzugsweise bestehen die SiC-Kurzfasern aus β -SiC.

Die Kohlenstofffasern können eine Verbesserung der mechanischen Stabilität bewirken. Durch das Einbringen von Kohlenstofffasern auf Basis von (Polyacrylnitril) oder Pech kann ein kohlenstofffaserverstärkter SiC-Kohlenstoff erhalten werden. Durch den Pyrolyseprozess werden die Kohlenstofffasern nicht beeinträchtigt und durch den Silizierprozess werden die Fasern von außen teilweise ansiliziert, d.h. außenliegender Kohlenstoff wird teilweise zu SiC umgesetzt, die Kohlenstofffasern bleiben im Kern jedoch erhalten. Das Silizium setzt sich primär mit den Partikeln des vorzugsweisen biomorphen Kohlenstoffs zu SiC um und ummantelt die Kohlenstofffasern. Durch diese Ummantelung werden die Kohlenstofffasern vor eventuell auftretenden oxidierenden Bedingungen geschützt. Die eingebrachten Kohlenstofffasern führen zu einer deutlichen Verbesserung der Thermoshockstabilität, die insbesondere für Dieselrußfilter eine besondere Rolle spielt. Aufgrund ungleichmäßiger Rußbelastung kann es nämlich während des Regenerationsprozesses zu einem inhomogenen Abbrand auf bzw. in dem Filter kommen und damit zu einer inhomogenen Wärmebeaufschlagung des Filters, die aufgrund des großen thermischen Ausdehnungskoeffizienten des β-SiC zu extremen thermischen Spannungen im Filter und zu einem Bruch des Filters führen kann. Um dies zu vermeiden ist der β-SiC-haltige keramische Formkörper vorzugsweise in Segmente unterteilt, die mit einer Dehnungsfuge zusammengeklebt sind. Besonders bevorzugt ist der Klebstoff ein keramischer Feuerfestkleber, der durch Zumischung von thermisch hochleitfähigem Material eine Wärmeleitfähigkeit von mehr als 10 W/mK aufweist. Unter dem Begriff "Feuerfestkleber" versteht man erfindungsgemäß eine Masse auf keramischer Basis, die chemisch oder hydraulisch aushärtet und mindestens bis 1000°C, vorzugsweise bis 1600°C, temperaturbeständig ist.

Bei Verwendung von Polymerfasern können in dem Silizium- und Kohlenstoff-haltigen Formkörper nach Durchführung einer Pyrolyse gerichtete, vorzugsweise lineare, Porenstrukturen erzeugt werden. Bei den Polymerfasern handelt es sich beispielsweise um organische Polymere, die bei der Pyrolyse verbrennen. Als Polymerfasern können beispielsweise PE-Fasern (Polyethylenfasern) verwendet werden. Als mögliche Polymerfasern können ferner auch Naturfasern wie Jute, Flachs, Cellulose oder Ligninfasern verwendet werden. Die Polymerfasern verbrennen teilweise oder vollständig bei der Pyrolyse und hinterlassen Hohlräume. Die Naturfasern werden bei der Pyrolyse zu Kohlenstofffasern umgewandelt, wodurch ihr Volumen abnimmt bzw. auch verbrannt. Hierdurch können gerichtete Porenstrukturen erzeugt werden. Über den Faserdurchmesser und die Faserlänge der Kohlenstoff-Fasern kann sowohl der Porendurchmesser als auch die Porenlänge bzw. -tiefe definiert eingestellt werden. Bei Verwendung von Fasergemischen unterschiedlicher Faserlänge und/oder mit unterschiedlichem Faserdurchmesser kann in dem Formkörper eine definierte Porenstruktur oder Porenverteilung eingestellt werden. Hierdurch kann ein SiC-haltiger Formkörper mit definierter Porengröße, Porenverteilung und Porentiefe hergestellt werden. Vorzugsweise werden Polymerfasern mit einer Faserlänge im Bereich von 0,5 bis 5 mm eingesetzt. Alternativ oder kumulativ zu den Polymerfasern kann auch ein Polymerpulver verwendet werden, wobei durch das Polymerpulver keine gerichtete Porenstruktur entsteht.

Nach der Extrusion wird der erhaltene Formkörper vorzugsweise pyrolysiert. Die Pyrolyse erfolgt bevorzugt in einer inerten, vorzugsweise nichtoxidierenden, Atmosphäre. Beispielsweise kann die Pyrolyse in einer Inertgasatmosphäre wie Stickstoff durchgeführt werden. Die Pyrolyse kann bei einer Temperatur von 600 °C bis 1000°C. durchgeführt werden. Bei der Pyrolyse werden die Extrusionshilfsmittel entfernt sowie die Bindemittel, wie beispielsweise Phenolharze, carbonisiert und werden unter Volumen- und Gewichtsreduktion in Glaskohlenstoff umgewandelt. Hierdurch bilden sich Poren in dem Formkörper.

Unter dem Begriff "Glaskohlenstoff" ist eine Kohlenstoffform mit ausgeprägter struktureller Fehlordnung und glasartigem Bruchbild zu verstehen. Die Kohlenstoffatome mit sp2-Bindung sind in ebenen Schichten mit hexagonaler Symmetrie angeordnet. Im Gegensatz zu Graphit sind diese Schichten bei glasartigem Kohlenstoff nicht regelmäßig über größere Bereiche hinweg geordnet. Bänder aus graphitisch geordnetem, übereinander geschichteten Strukturen bilden eine polymerähnliche Knäuelstruktur. Glaskohlenstoff ist im Makrobereich porenfrei, zwischen den Graphitschichten sind aber zahlreiche Hohlräume vorhanden. Dies führt zu einer außerordentlich hohen Korrosionsbeständigkeit gegen saure und alkalische Reagentien. Glaskohlenstoff wird lediglich durch Sauerstoff über 600°C und oxidierende Schmelzen angegriffen. Glaskohlenstoff lässt sich im Harz-Siliziumpulvergemisch gut umsetzen, eine externe Infiltration von Glaskohlenstoff mit Si-Schmelze ist nicht ohne weiteres möglich.

Durch die Koextrusion von Silizium- und Kohlenstoff-haltigen Partikeln entsteht bei der Pyrolyse eine poröse Struktur, die den Kohlenstoff und das Silizium homogen vermischt enthält, wobei der Glaskohlenstoff (pyrolysiertes Harz) sowohl die Kohlenstoffpartikel als auch die Siliziumpartikel als Binder zusammenhält. Diese Struktur weist eine extrem hohe Kontaktfläche zwischen Silizium und Kohlenstoff auf, was wiederum zu einer sehr schnellen Kinetik der SiC-Bildung führt.

Äußerst vorteilhaft können diese porösen Silizium- und Kohlenstoff-haltigen Formkörper als Massenprodukt und mithin sehr kostengünstig hergestellt werden, da diese sehr gut extrudierbar sind.

Die extrudierten Silizium- und Kohlenstoff-haltigen Formkörper können eine quaderförmige oder zylindrische Formgebung aufweisen. Die Formkörper können auch einen polygonalen Querschnitt, beispielsweise hexagonalen oder octogonalen Querschnitt, aufweisen. Vorzugsweise weisen die extrudierten Kohlenstoff-haltigen Formkörper, die sich entlang der Längsachse des Formkörpers erstreckende Kanäle auf, die wesentlichen parallel zueinander angeordnet sind.

Für die Herstellung der Silizium- und Kohlenstoff-haltigen Formkörper können beispielsweise die in der DE 101 04 882 A1 und DE 102 13 016 A1 offenbarten Herstellungsverfahren, die hiermit unter Bezugnahme aufgenommen sind, verwendet werden, wobei der Silizium- und Kohlenstoff-haltige Formkörper durch entsprechende Modifikation der Verfahren erhalten wird: Das Silizium wird in der Rezeptur ergänzt bzw. der Ton durch Silizium ersetzt und der Anteil an Kohlenstoff und Harz so eingestellt, dass sich das korrekte Mischungsverhältnis von Silizium zu Kohlenstoff im pyrolysierten Formkörper einstellt.

Das erfindungsgemäße Herstellungsverfahren erfolgt vorzugsweise in drei Wärmebehandlungsstufen:
1. Trocknung des extrudierten Silizium- und Kohlenstoff-haltigen Formkörper unter Bildung eines Grünkörpers
2. Pyrolyse unter inerter Atmosphäre, z.B. unter Stickstoff unter ständiger Spülung zum Austragen der Pyrolyseprodukte
3. Silizierung zur Umwandlung der Kohlenstoffs und des Siliziums in β-SiC, vorzugsweise in sauerstofffreier Atmosphäre, beispielsweise unter Vakuum oder Argonatmosphäre.

Die Trocknung und die Pyrolyse erfolgt beispielsweise mit Mikrowellentechnik. Sowohl die Kohlenstoffpartikel als auch die Siliziumpartikel koppeln aufgrund ihrer Leitfähigkeit an die Mikrowellenstrahlung an. Insbesondere die Kohlenstoffpartikel heizen sich durch die Mikrowellenstrahlung stark auf. Auf diese Weise können die Grünkörper mit der Hilfe von Mikrowellen schneller auf die Pyrolysetemperatur aufgeheizt werden. Vorzugsweise verwendet man ein Verfahren, bei dem der Grünkörper gleichzeitig mit konventioneller Heiztechnik von außen (beispielsweise durch Widerstandheizelemente wie Kantalheizer) und mit Mikrowellentechnik von innen aufgeheizt wird. Um einen Einfluss des inhomogenen Mikrowellenfeldes auf den Pyrolyseprozess zu vermeiden, wird die Temperaturbehandlung vorzugsweise in einem Durchlaufofen durchgeführt.

Im Trocknungs-Schritt wird das Wasser aus dem nassen extrudierten Grünkörper entfernt. Der so erhaltene trockene Formkörper weist eine sehr dichte Struktur auf, da er neben den Extrusionshilfsmitteln auch noch das nicht pyrolysierte Harz teilweise in angeschmoizenem Zustand enthäit.

Durch die Pyrolyse werden alle Hilfsmittel wie der Celluloseether und die Seife aus der Struktur herausgebrannt. Weiterhin wird das verwendete Harz carbonisiert, d.h. es wird unter Abspaltung von Abbauprodukten in eine reine Kohlenstoffstruktur umgewandelt. Hierdurch verliert es deutlich an Volumen. Dieser kontrollierte Abrand der Hilfsmittel und eines Teiles des Harzes führt zu einer porösen Struktur. Es entsteht ein poröses Kohlenstoffgitter, in dem die Siliziumpartikel fest eingebunden sind.

Die durchgeführte Pyrolyse der extrudierten Silizium- und Kohlenstoff-haltigen Formkörper erfolgt bei einer Temperatur von 600 bis 1000 °C, bevorzugt bei einer Temperatur von 700 bis 900 °C und besonders bevorzugt bei einer Temperatur von 750 bis 850 °C in inerter, Sauerstoff-freier, Atmosphäre. Die Pyrolyse findet vorzugsweise in Stickstoffatmosphäre statt. Um eine Zerstörung oder Rißbildung der Kohlenstoff-haltigen Formkörper durch die bei der pyrolytischen Zersetzung der organischen Bindemittel und/oder Extrusionshilfsmittel entstehenden Gase zu verhindern, wird vorzugsweise bis zu einer Temperatur von ca. 400 bis 500 °C eine langsame Heizrate gewählt, beispielsweise von 1 bis 2 °C/min.. Im nachfolgenden kann eine höhere Heizrate, beispielsweise von 5 °C/min., verwendet werden. Die Pyrolysetemperatur wird vorzugsweise für 0,25 bis 4h, besonders bevorzugt für 0,5 bis 1 Stunde gehalten.

Der nachfolgende Silizierungsschritt erfolgt bevorzugt bei Temperaturen oberhalb des Schmelzpunktes von Silizium, vorzugsweise bei einer Temperatur zwischen 1420 und 1700°C. Die Endtemperatur wird vorzugsweise zwischen 1 und 4 Stunden gehalten. Das aufgeschmolzene Silizium wird hierbei in das poröse Kohlegerüst gesaugt und hinterlässt Hohlräume, die die späteren Poren bilden. Am Haltepunkt oberhalb des Schmelzpunktes erfolgt die Umwandlung in das β-SiC. Es handelt sich hierbei nicht um eine klassischen Sintervorgang, sondern um eine chemische Umwandlung in eine neue Verbindung. Vorzugsweise wird die Silizierung unter Sauerstoffausschluss durchgeführt. Besonders bevorzugt wird die Pyrolyse unter Vakuum oder Argonatmosphäre durchgeführt.

Die Pyrolyse und/oder die Silizierung werden vorzugsweise in inerter, Sauerstoff-freier Atmosphäre durchgeführt.

Bei einer weiteren Weiterbildung des erfindungsgemäßen Verfahrens werden dem Silizium Metalle zugemischt, die nachfolgend auch als Legierungselemente bezeichnet werden, die den Schmelzpunkt des Siliziums absenken und somit zu einer Erniedrigung der Temperatur zur Bildung von β-SiC führen. Im folgenden werden Silizium-Metall-Gemische auch als Siliziumlegierungen bezeichnet.

Bevorzugt werden Metalle, die Silizidbildner und/oder Carbidbildner sind, verwendet. Vorzugsweise werden Metalle aus der Gruppe, die aus Mo, Al, Fe, Ti, Cr, Ni, Cr, Mg, Cu, Co sowie Gemischen und Legierungen davon besteht, ausgewählt. Besonders bevorzugt sind Fe, Cr, Ti, Al und/oder Gemische davon. Die Si-Legierungselemente liegen vorzugsweise innerhalb der SiC-Struktur als Carbide und/oder Silicide vor. Die Si-Legierungselemente bilden vorzugsweise keine bindende Phase zwischen den SiC-Kristallen aus.

Bei einer besonders bevorzugten Ausführungsform wird die Silizierung mit Silizium und/oder einer Silizium-haltigen Substanz durchgeführt, die vorzugsweise insgesamt von 1 bis 90 Gew.-% Legierungselemente, bezogen auf das Gewicht an Silizium, umfaßt.

Erfindungsgemäß wird die Silizierung mit Silizium und/oder Silizium-haltigen Substanzen durchgeführt, die Aluminium mit einem Anteil von 1 bis 35 Gew.-%, bezogen auf das Gewicht an Silizium, umfasst. Durch die Zugabe von Aluminium in einem Bereich von 1 bis 35 Gew.-% wird der Schmelzpunkt der Si-Legierung auf bis zu 1150°C abgesenkt.

Bei einer weiteren Ausführungsform wird die Sitizierung mit Silizium und/oder Sitizium-haltigen Substanzen durchgeführt, die Titan mit einem Anteil von 5 bis 90 Gew.-%, besonders bevorzugt 7 bis 9 Gew.-% oder 81 bis 83 Gew.-%, bezogen auf das Gewicht an Silizium, umfasst. Durch die Zugabe von 5 Gew.-% bis 90 Gew.-% Titan wird der Schmelzpunkt der Si-Legierung auf bis zu 1350°C abgesenkt.

Die Si-Legierungsschmelze weist einen deutlich niedrigeren Schmelzpunkt als das Silizium selbst auf, wodurch sich die Silizierungstemperatur reduzieren läßt. Entsprechend der Schmelzpunkterniedrigung, die durch die zugemischten Metalle erreicht wird, wird das Verfahren vorzugsweise bei Temperaturen durchgeführt, die über dem Schmelzpunkt der Siliziumlegierung liegt, die aber unter dem Schmelzpunkt von reinem Silizium liegt.

Des weiteren hat sich gezeigt, dass bei Verwendung von Siliziumlegierungen bei der Schmelzinfitration ferner die sprunghafte Volumenzunahme, die bei einer Erstarrung einer reinen Siliziumschmelze auftritt, reduziert oder sogar weitgehend vermieden wird.

Bei Verwendung einer Siliziumlegierung bei der Silizierung des Kohlenstoffhaltigen Formkörpers können die durch die Verspannungskräfte des erstarrten Siliziums bedingten Probleme vermieden werden und mithin eine höhere Festigkeit, insbesondere bei thermischer und mechanischer Wechselbeanspruchung, erreicht werden. Äußerst vorteilhaft kann zugleich das Herstellungsverfahren einfacher und kostengünstiger gestaltet werden. Bei Verwendung von Silizidbildnern wie Mo, Fe und/oder Ti kann der Anteil des freien Si im Endprodukt verringert werden.

Das erfindungsgemäß verwendete Aluminium kann nach der Silizierung durch Zugabe von Sauerstoff bzw. Sauerstoff-haltiger Atmosphäre zu Aluminiumoxid oxidiert werden. Das Aluminiumoxid kann dabei vorteilhaft als Haftvermittler für katalytisch aktive Beschichtungen, die auf dem porösen oder hochporösen keramischen β SiC-haltigen Formkörper in einem nachgeschalteten Beschichtungsprozess aufgebracht werden können, wirken.

Die Pyrolyse des Silizium- und Kohlenstoff-haltigen Formkörpers und die Silizierung des Silizium- und Kohlenstoff-haltigen Formkörpers können in zwei getrennten Verfahrensschritten durchgeführt werden. Die zweistufige Verfahrensführung der Pyrolyse und Silizierung kann auch in einem einstufigen Verfahren zusammengefaßt werden. Die bei der pyrolytischen Zersetzung des Bindemittels und etwaig vorhandener Extrusionshilfsmittel entstehenden gasförmigen Produkte (Pyrolysate) stellen keine wesentliche Beeinträchtigung der Silizierung dar. Gemäß einer bevorzugten Weiterbildung der Erfindung werden die Silizierung und die Pyrolyse sowie die reaktive Umsetzung zu SiC-, SiC/C-, Si/SiC- und/oder Si/SiC/C-Keramiken in inerter Atmosphäre in einem Verfahrensschritt zusammen durchgeführt. Vorzugsweise wird die Pyrolyse unter Stickstoffatmosphäre unter ständigem Spülen statt, um die Pyrolyseprodukte abzuführen. Die Silizierung findet vorzugsweise in einer inerten, Sauerstoff-freien Atmosphäre, besonders bevorzugt unter Vakuum oder Argonatmosphäre statt.

Die der Erfindung zugrunde liegende Aufgabe wird ferner durch Bereitstellung eines porösen β-SiC-haltigen keramischen Formkörpers gelöst.
Erfindungsgemäß wird ein poröser β-SiC-haltiger keramischer Formkörper bereitgestellt, welcher einen mittleren Porendurchmesser, welcher auch als mittlere Porengröße bezeichnet wird, im Bereich von 0,1 µm bis zu 50 µm, vorzugsweise 5 bis 35 µm, weiter bevorzugt zwischen 10 und 25 µm, besonders bevorzugt zwischen 4 bis 15 µm, aufweist. Unter der mittleren Porengröße ist die durchschnittliche Porengröße, die sich aus dem Mittelwert aller Porengrößen ergibt, zu verstehen. Der Porendurchmesser kann auch als Porengröße bezeichnet werden.

Bei einer Ausführungsform wird nach der Silizierung in Schritt (c) die Porosität des erhaltenen β-SiC-haltigen Formkörpers durch Entfernen von nicht zu SiC umgesetztem Silizium erhöht. Vorzugsweise erfolgt das Entfernen des Siliziums durch chemisches Lösen von Silizium unter Einwirkung von Säure und/oder Lauge oder unter Aufheizen des β-SiC-haltigen Formkörpers und Verflüssigen und/oder Verdampfen von Silizium, wobei besonders bevorzugt das Entfernen des verflüssigten und/oder verdampften Siliziums zusätzlich durch Anlegen von Unterdruck unterstützt wird.

Das Herauslösen des noch freien Siliziums kann auch durch Abdampfen des Siliziums bei einer geeigneten Temperatur oberhalb der Dampftemperatur des Siliziums, vorzugsweise bei oberhalb 1400 °C, besonders bevorzugt bei Temperaturen zwischen 1400°C und 1900°C erfolgen. Bei einer Ausführungsform wird das Abdampfen des Siliziums bei Temperaturen zwischen 1400°C und 1700°C durchgeführt.

Bevorzugte Weiterbildungen des porösen β-SiC-haltiger keramischer Formkörpers sind in den Unteransprüchen 20 bis 32 angegeben.

Die Porosität des β-SiC-haltigen Formkörpers liegt dabei in einem Bereich von 20% bis 90%, vorzugsweise von 20% bis 80%, besonders bevorzugt von 30 % bis 65%. Für poröse Partikelfiltermedien werden bevorzugt Porositäten in einem Bereich von 20% bis 70%, besonders bevorzugt von 30% bis 65% eingestellt. % Porosität bedeutet offenes Volumen bezogen auf das Volumen der festen Struktur. Unter Porosität versteht man die Summe der Hohlräume in einem festen, porösen Körper, bezogen auf dessen äußeres Volumen. Die Summe der Hohlräume wird dabei in % bezogen auf das äußere Volumen angegeben, welches 100% entspricht.

Vorzugsweise weist der poröse β-SiC-haltige Formkörpers eine differentielle Porenverteilung mit einem Peak, vorzugsweise einem unimodalen Peak, auf. Die differentielle Porenverteilung ergibt sich durch das spezifische Volumen der Pore (mm³/g) in Abhängigkeit von der Porengröße der Pore (µm) und wird beispielsweise mit der Hilfe der Quecksilberintrusion gemessen. Die Quecksilberintrusion wird gemäß DIN 66133 durchgeführt. Als Ergebnis der Quecksilberintrusionsmessung erhält man das Porenvolumen bezogen auf das Gesamtgewicht des untersuchten Probenkörpers für die jeweilige Porengröße. Die differentielle Porenverteilung stellt somit das spezifische Porenvolumen bei der jeweiligen Porengröße da. Das spezifische Porenvolumen gibt das Porenvolumen bei der angegebene Porengröße bezogen auf das Gesamtgewicht des untersuchten Probenkörpers an. Die Position des Maximums des Peaks der differentiellen Porenverteilung gibt die am häufigsten vorkommende Porengröße an.

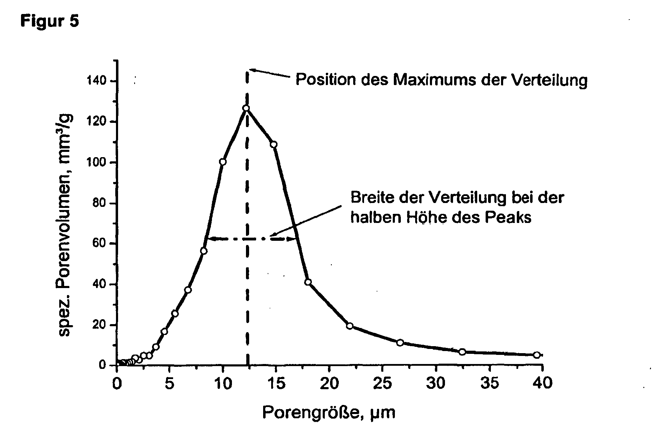

Vorzugsweise weist der poröse β-SiC-haltige Formkörper eine differentielle Porenverteilung mit einem unimodalen Peak mit einem Maximum im Bereich von 1 bis 25 µm auf. Vorzugsweise beträgt die Breite dieses Peaks bei seiner halben Höhe maximal das 1,5-fache der häufigsten Porengröße. Weiter bevorzugt ist die Breite des Peaks bei seiner halben Höhe so groß wie die häufigste Porengröße und besonders bevorzugt maximal 80% der häufigste Porengröße (vgl. Figur 5). Beispielsweise beträgt die Breite eines Peaks, der ein Maximum bei einer Porengröße von 4 µm aufweist, bei seiner halben Höhe maximal 6 µm (1,5fache der häufigsten Porengröße), wobei die Breite des Peaks der Differenz zwischen dem größeren und dem kleineren Porendurchmesser bei der halben Höhe des Peaks entspricht.

Vorzugsweise besteht das in dem erfindungsgemäßen porösen β-SiC-haltige Formkörper enthaltenen β-SiC zu 90 Gew.-%, vorzugsweise zu 95 %, weiter bevorzugt zu 98 Gew.-% besonders bevorzugt zu 100 Gew.-% aus β-SiC (kubische Kristallform des SiC). Diese Wertangaben beziehen sich auf Si ohne Legierungselemente. β-SiC bildet sich bei Temperaturen zwischen 1450 und 1900 °C aus Silizium und Kohlenstoff.

Der poröse β-SiC-haltige Formkörper weist ein dreidimensionales, durchgehendes β-SiC-Gerüst auf, welches vorzugsweise β-SiC-Kristalle mit einer Korngröße zwischen 0,1 µm und 100 µm, besonders bevorzugt zwischen 0,1 µm und 10 µm, umfasst.

Vorzugsweise weist das poröse β-SiC-Gerüst des erfindungsgemäßen porösen β -SiC-Formkörpers einen Restgehalt an freiem, nicht umgesetzten Silizium auf, der vorzugsweise maximal 20 Gew.-%, weiter bevorzugt maximal 10 Gew.-%, besonders bevorzugt maximal 5 Gew.-%, jeweils bezogen auf das Gesamtgewicht des porösen Formkörpers ausmacht.

Vorzugsweise weist das poröse β-SiC-Gerüst des erfindungsgemäßen porösen β-SiC-Formkörpers einen Restgehalt an freiem, nicht umgesetzten Kohlenstoff auf, der vorzugsweise maximal 5 Gew.-% bezogen auf das Gesamtgewicht des porösen Formkörpers ausmacht. Bei einer bevorzugten Ausführungsform umfasst der freie nicht umgesetzte Kohlenstoff Kohlenstofffasern.

Neben SiC-Phasen können auch Si/SiC-Phasen, SiC/C-Phasen und/oder Si/SiC/C-Phasen in dem SiC-haltigen keramischen Formkörper vorliegen. Die Bildung dieser Phasen kann beispielsweise von dem eingestellten stöchiometrischen Verhältnis von Si zu C und/oder auch von der Art der verwendeten Silizium-haltigen Substanz abhängen.

Der erfindungsgemäße poröse β-SiC-haltige keramische Formkörper weist eine poröse Matrix auf, die SiC, SiC/C, Si/SiC und/oder Si/SiC/C umfaßt oder daraus besteht. Vorzugsweise ist die poröse Matrix hochporös. Die Matrix des erfindungsgemäßen Formkörpers eignet sich als Partikelfilter, beispielsweise Dieselrußpartikelfilter.

Vorzugsweise weist der β-SiC-haltige keramische Formkörper eine Kanäle-haltige Struktur auf. Vorzugsweise weist die Kanäle-haltige Struktur eine Kanaldichte von 50 bis 400 Kanälen/inch², weiter bevorzugt von 180 bis 300 Kanälen /inch², besonders bevorzugt von 200 bis 300 Kanälen /inch², auf. Vorzugsweise weisen die Kanalwände eine Dicke in einem Bereich von 100 µm bis 480 µm, vorzugsweise 150 bis 420 µm, bevorzugt von 150µm bis 400 µm, vorzugsweise von 200 µm bis 380 µm, weiter bevorzugt von 220 µm bis 350 µm, auf.

Bei einer bevorzugten Ausführungsform weist die Matrix des keramischen Formkörpers eine im wesentlichen aus β―SiC und etwaig nicht umgesetztem Kohlenstoff bestehende Skelettstruktur auf. Dabei kann im Kern der Skelettstruktur noch Kohlenstoff enthalten sein, der mit SiC ummantelt ist. Des weiteren kann auf dem SiC eine weitere Schicht aus Silizium oder SiO₂ angeordnet sein. Eine SiO₂-Schicht kann die darunter liegende Siliziumschicht vor weitere Oxidation schützen. Bei einer bevorzugten Ausführungsform enthält die Skelettstruktur des Formkörpers kein SiO₂.

Gemäß einer bevorzugten Weiterbildung enthält der β-SiC-haltige Formkörper
0 bis 10 Gew.-%, vorzugsweise von 0 bis 5 Gew.-%, Kohlenstoff,
70 bis 100 Gew.%, vorzugsweise 90 bis 100 Gew.-%, β -SiC,
0 bis 20 Gew.-%, vorzugsweise 1 bis 5 Gew.-%, Si,
wobei sich die Angaben in Gew.-% jeweils auf das Gesamtgewicht des β -SiC-haltigen Formkörpers beziehen und sich unter Berücksichtigung etwaiger weiterer Komponenten auf 100 Gew.-% addieren.

Der poröse β-SiC-Formkörper umfasst ein dreidimensionales, durchgehendes, β -SiC-Gerüst. Unter "dreidimensionalem, durchgehendem β-SiC-Gerüst" im Sinne der Erfindung ist eine β-SiC-Struktur zu verstehen, die reaktionsgebundene β-SiC umfasst, welches ohne weitere Bindemittel eine feste Struktur ausbildet, Bei herkömmlichen SiC-Strukturen wird das SiC-Gerüst über ein Bindemittel, beispielsweise geschmolzenes Silizium gebunden. Der große Vorteil eines durchgehenden SiC-Gerüstes ist, dass der Formkörper wesentlich stabiler und beständiger gegenüber aggressiven Medien, wie beispielsweise Autoabgasen, ist. Bei herkömmlichen SiC-Strukturen , bei denen das SiC-Gerüst über Bindemittel gebunden ist, erfolgt über die Zeit ein Abbau des Bindemittels beispielsweise durch Oxidation, wodurch der Formkörper zerstört wird. Den Erfindern ist es somit überraschenderweise gelungen einen porösen β-SiC-Formkörper bereitzustellen, der eine überragende chemische und mechanische Beständigkeit aufweist.

Erfindungsgemäß umfasst der β-SiC-haltige Formkörper neben β-SiC auch Phasen aus oder mit Eisensilizid(en), vorzugsweise FeSi₂ und/oder FeSi, Chromsilizid(en), vorzugsweise CrSi₂, und/oder Titansilizid(en), vorzugsweise TiSi₂, Ti₃Si₅ und/oder TiC₂Si₃, und/oder Cobaltsilizid(en), vorzugsweise CoSi₂, Co₂Si und/oder CoSi.

Ferner kann der SiC-haltige Formkörper neben SiC auch Phasen aus oder mit Metallcarbiden umfassen. Vorzugsweise werden die weiteren Metalle aus der Gruppe, die aus Mo, Al, Fe, Ti, Cr, Ni, Mg, Cu, Co, Mn, Gemischen und Legierungen davon besteht, ausgewählt.

Gemäß einer weiteren Ausführungsform ist der β-SiC-haltige Formkörper faserverstärkt. Die Fasern, vorzugsweise Kohlenstofffasern (beispielsweise PAN (Polyacryinitril) oder Pechfasern) und/oder Kurzfasern aus β-SiC (Whisker) werden bereits in die zu extrudierende Masse bei der Herstellung des Kohlenstoff-haltigen Formkörpers eingebracht und bewirken eine Festigkeitssteigerung des Formkörpers. Die β-SiC-Kurzfasern bewirken eine rein mechanische Festigkeitssteigerung. Der Gehalt der β-SiC-Kurzfasern wird so gewählt, das die sich neu bildende β-SIC-Struktur dadurch nicht beeinträchtigt wird. Die Kohlenstofffesern bewirken hingegen eine deutliche Verbesserung der Thermoschocksstabilität. Das Silizium setzt sich primär mit den Partikeln des biomorphen Kohlenstoffs zu β-SiC um und ummantelt die Kohlenstofffasern. Durch diese Ummantelung werden die Kohlenstofffasern vor eventuell auftretenden oxidierenden Bedingungen geschützt.

Durch die Verwendung von Natur- und/oder Polymerfasern können in dem Formkörper auch gerichtete Porenstrukturen erzeugt werden. Die Fasern werden bei der vorzugsweise durchgeführten Pyrolyse pyrolysiert. Dadurch werden in dem Kohlenstoff-haltigen Formkörper, vorzugsweise lineare oder gerichtete, Poren mit definiertem Porendurchmesser erzeugt, die nach der Silizierung in dem β-SiC-haltigen keramischen Formkörper enthalten sind. Über den Durchmesser der verwendeten Fasern läßt sich der Durchmesser der gerichteten Poren einstellen. Vorzugsweise liegt die Länge der Natur- und/oder Polymerfasern in einem Bereich von 100 bis 500 µm. Die durch die Pyrolyse entstehenden Poren haben vorzugsweise eine Länge von 50 bis 500µm. Vorzugsweise liegt der Durchmesser der gerichteten oder linearen Poren in einem Bereich von 5 bis 50 µm, weiter bevorzugt von 8 bis 25 µm. Die Einstellung eines definierten Porendurchmessers ermöglicht äußerst vorteilhaft die Bereitstellung von Filtern mit definierten Filtereigenschaften. Die definierte Porengröße der gerichteten Poren kann so eingestellt werden, dass beispielsweise die Trennung eines Partikelgemisches in verschiedene Partikel mit verschiedenen Größen möglich ist.

Gemäß einer bevorzugten Ausführungsform ist der β-SiC-haltige Formkörper ein Filter, vorzugsweise ein Partikelfilter. Vorzugsweise besteht der Filter aus mehreren Teilen, die durch einen Klebstoff verbindbar oder verbunden sind. Besonders bevorzugt ist der Klebstoff ein keramischer Feuerfestkleber, der durch Zumischung von thermisch hochleitfähigem Material eine Wärmeleitfähigkeit von mehr als 10 W/mK aufweist. Unter dem Begriff "Feuerfestkleber" im Sinne der Erfindung wird eine Masse auf keramischer Basis verstanden, die chemisch oder hydraulisch aushärtet und bis mindestens 1000°C, vorzugsweise bis 1600°C, temperaturbeständig ist.

Der β-SiC-haltige Formkörper weist vorzugsweise eine quaderförmige oder zylindrische Formgebung auf. Die Formkörper können auch einen polygonalen Querschnitt, beispielsweise hexagonalen oder oktogonalen Querschnitt, aufweisen. Vorzugsweise weisen die extrudierten Kohlenstoff- und Siliziumhaltigen Formkörper sich entlang der Längsachse des Formkörpers erstreckende Kanäle auf, die wesentlichen parallel zueinander angeordnet sind.

Erfindungsgemäß sind die Kanäle nicht durchgehend. Die Kanäle sind wechselseitig verschlossen. Das heißt, die im wesentlichen parallel zueinander liegenden Kanäle sind abwechselnd an ihrem einen oder anderen Ende verschlossen. Dies ermöglicht die Verwendung eines solchen β-SiC-haltigen keramischen Formkörpers als Filter, wobei das zu filtrierende Medium durch die Wandung von einem Kanal in den Nachbarkanal übertritt und die partikulären Verunreinigungen zurückgehalten werden. Bei einer vorteilhaften Ausführungsform weist der hochporöse keramische Formkörper Kanäle und poröse Membranstege auf.

Die der Erfindung zugrundeliegende Aufgabe wird des weiteren durch ein System gelöst, das einen porösen β-SiC-haltigen keramischen Formkörper nach einem der Ansprüche 19 bis 32 enthält. Der erfindungsgemäße Formkörper eignet sich mithin zu einer Verwendung in einem Filtersystem.

Das System kann beispielsweise ein Abgassystem eines Kraftfahrzeuges oder eine Abgasbehandlungsanlage eines Verbrennungsmotors sein, in dem der poröse β-SiC-haltige keramische Formkörper angeordnet ist.

Der poröse β-SiC-haltige keramische Formkörper gemäß der vorliegenden Erfindung kann auch als Katalysatorträgerstruktur sowie entsprechenden Katalysatorsystemen verwendet werden.

Das erfindungsgemäße Verfahren ermöglicht somit die Bereitstellung eines β-SiC-Formkörpers bei dem bei der Herstellung der Energieaufwand geringer ist und der Verschleiß bzw. der Abrieb an den Formwerkzeugen verringert wird. Ferner ist der erfindungsgemäße poröse β-SiC-Formkörper geeignet, Feinstaub zurückzuhalten, der im zunehmenden Maße eine Umweltbelastung darstellt.

Die sehr feine Porenverteilung des erfindungsgemäßen Formkörpers ist für die effektive Rußfiltration in einer Abgasanlage eines Dieselmotors notwendig. Sind die Poren zu groß, so lagern sich die Rußpartikel zunehmend in der Wandstruktur ab und es kommt zu einem Tiefenfiltereffekt, d.h. die Rußpartikel verursachen in der Wand einen starken Anstieg des Druckabfalls, der mit den meisten Regenerationsverfahren nicht mehr rückgängig gemacht werden kann. Bei den dem erfindungsgemäßen porösen Formkörper sind die Poren so fein, so dass sich der Ruß in Form einer porösen Schicht auf der Oberfläche des Filters ablagert. In diesem Fall ist der Druckabfallanstieg durch diese poröse Oberflächenschicht geringer als bei dem Tiefenfiltereffekt und auf der Oberfläche des Filters kann der Ruß mit den gängigen Regenerationsverfahren, beispielsweise durch Abbrand oder Verbrennen, sehr gut wieder entfernt werden.

Erfindungsgemäß wird ein Formkörper erhalten, der für eine effektive Dieselrußfiltration hervorragend geeignet ist. Beispielsweise weist ein runder erfindungsgemäßer Dieselrußfilter mit einer Anströmfläche von 165 cm² und einem Durchmesser von 14,4 cm, bei einer Länge von 18 cm im Neuzustand (ohne Rußbeladung) bei einer Temperatur von 600°C bei einem Massendurchsatz von 600 kg/h eine maximale Druckdifferenz von maximal 200 mbar auf.

### Figuren

Figur 1 zeigt eine elektronenmikroskopische Vergrößerung des extrudierten Grünkörpers aus Beispiel 1, der mit Hilfe der Mikrowellentechnik getrocknet wurde.
Figur 2 zeigt eine zeigt eine elektronenmikroskopische Vergrößerung des porösen Formkörpers aus Beispiel 1 nach der Pyrolyse bei 800°C unter Stickstoffatmosphäre.
Figur 3 zeigt eine zeigt eine elektronenmikroskopische Vergrößerung des porösen Formkörpers aus Beispiel 1 nachdem der poröse Formkörper bei 1500°C siliziert wurde.
Figur 4 zeigt für hergestellte Formkörper das spezifische Porenvolumen [mm³/g] in Abhängigkeit von der Porengröße [µm] (logarithmische Auftragung) bei den Beispielen 1 und 2 (differentielle Porenverteilung).
Figur 5 zeigt für den Formkörper aus Beispiel 1 die differentielle Porenverteilung, d.h. das spezifische Volumen der Pore [mm³/g] in Abhängigkeit von der Porengröße [µm] (lineare Auftragung).
Figur 6 zeigt für den Formkörper aus Beispiel 1 die Korngrößenverteilung des verwendeten Siliziumpulvers, dargestellt durch das Volumen der Siliziumpartikel in Abhängigkeit von der jeweiligen Korngröße bezogen auf das Gesamtvolumen aller Siliziumpartikel.
Figur 7 zeigt das Röntgenweitwinkelspektrum des Formkörpers aus Beispiel 1. Es ist deutlich zu sehen, dass der poröse Formkörper nur β-SiC enthält.

Durch die nachfolgenden Beispiele soll die vorliegende Erfindung näher erläutert, aber in keiner Weise beschränkt werden.

### Beispiele

### Beispiel 1

### β-SiC-Formkörper durch Extrusion einer Si-haltigen Kohlenstoffmasse und anschließender Umsetzung des Kohlenstoffs und des Siliziums zu β -Siliziumcarbid.

Ein extrudierter Formkörper wurde nach dem in der DE 101 04 882 beschriebenen Verfahren hergestellt. Der Masse wurde anstelle des Tons ein überstöchometrischer Siliziumanteil zugegeben, gemischt und anschließend extrudiert.

Zur Herstellung der Kanäle-haltigen Struktur aus Silizium und Kohlenstoff wurden Siliziumpulver, Aktivkohlepulver mit Phenolharz vermischt. Diese Komponenten wurden anschließend mit einem Celluloseether, Wasser und einem Plastifizierer in einem Kneter zu einer extrudierfähigen Masse verarbeitet. Diese Masse wurde nachfolgend extrudiert unter Erhalt eines Kanäle-haltigen Körpers, der mittels Mikrowellentechnik unter Stickstoffatmosphäre getrocknet wurde. Die Kanäle wiesen eine Wandstärke von 265 µm bei einer Kanaldichte von 200cpsi (cells per squareinch bzw. Kanäle pro inch²) auf.

Die Zusammensetzung der zur Extrusion verwendete Masse ist in Tabelle 1 angegeben.

**Tabelle 1**

| **Komponente** | **Gewichtsanteil %** |
|---|---|
| Aktivkohle | 8,4 |
| Phenolharz | 12,6 |
| Siliziumpulver | 40 |
| Celluloseether | 4 |
| Wasser | 24 |
| Gleithilfsmittel | 7 |
| Plastifizierer | 2 |
| Seife | 2 |

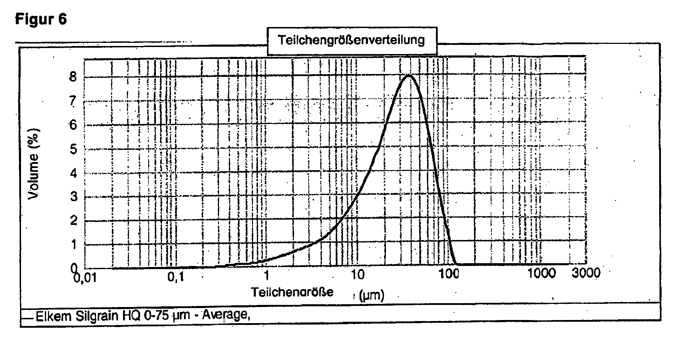

Die Aktivkohle hatte einen d₅₀-Wert zwischen 8 und 15 µm. Die Korngrößenverteilung der Aktivkohle lag im Bereich von 0,001 bis 35 µm. Das Siliziumpulver hatte eine maximale Korngröße von 75µm, wobei der d₅₀-Wert bei 26,5 lag. (vgl. Figur 6).

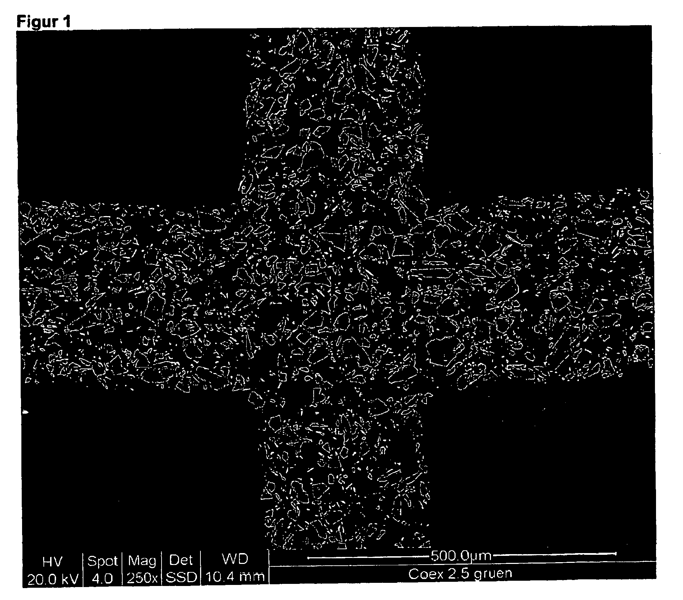

Eine elektronenmikroskopische Vergrößerung dieser getrockneten Struktur ist in Figur 1 dargestellt. Man kann sehr deutlich den hohen Anteil an Silizium, das mit der Aktivkohle, dem Harz und den Zuschlagsstoffen homogen vermischt ist, erkennen. Es ist ebenso zu erkennen, dass diese Struktur noch sehr dicht ist und kaum eine Porosität aufweist. Ferner liegen die Partikel nicht agglomeriert vor.

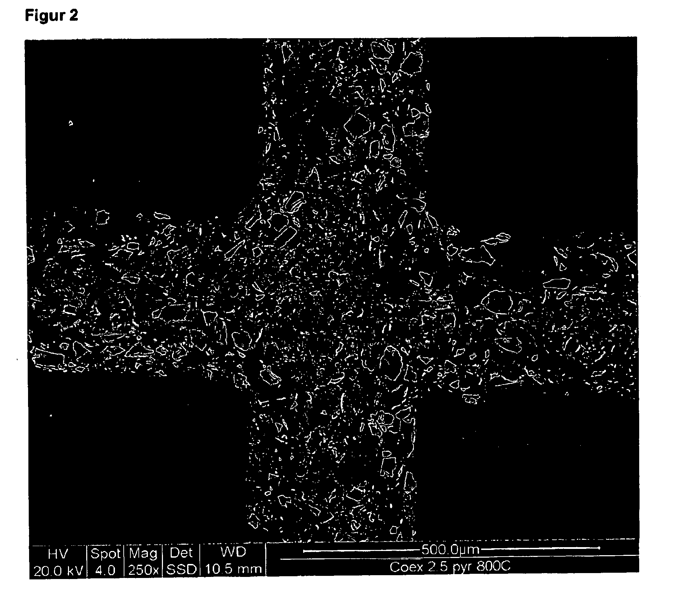

Das im Formkörper enthaltene Phenolharz wurde anschließend thermisch vernetzt. Der Formkörper wurde bei 800 ° unter Stickstoffatmosphäre pyrolysiert. Durch die Pyrolyse wurde ein poröser Formkörper aus einem Silizium-Kohlenstoff-Gemisch erzeugt. Eine elektronenmikroskopische Aufnahme dieser Struktur ist in Figur 2 dargestellt. Man kann in dieser Abbildung sehr gut erkennen, dass die Siliziumpartikel in einem porösen Kohlenstoffgitter homogen verteilt vorliegen.

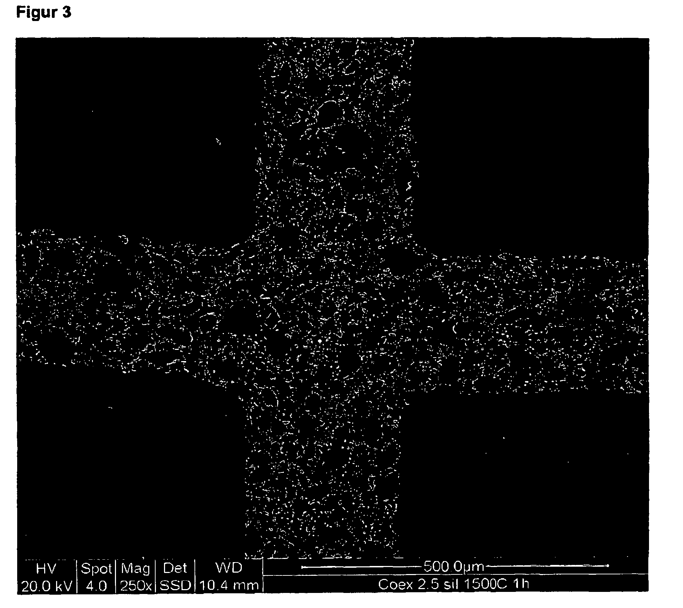

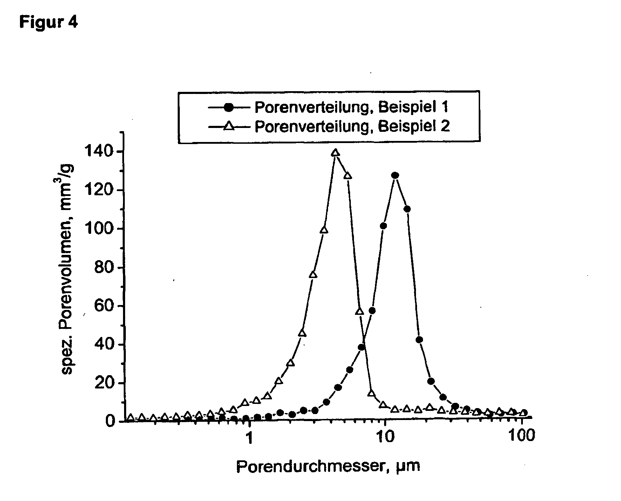

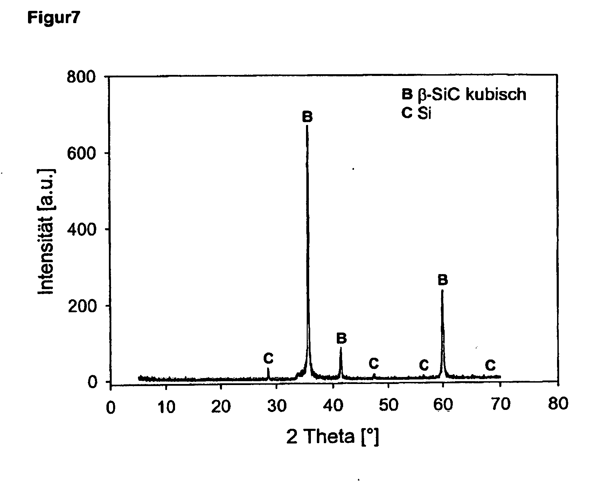

Der Formkörper wurde anschließend unter Argonatmosphäre oder Vakuum auf 1500 °C aufgeheizt, wobei diese Temperatur eine Stunde gehalten wurde. Durch diese Temperaturbehandlung wurde ein poröser, hochfester β-SiC-Formkörper erzeugt. Eine Abbildung dieser porösen β-SiC-Struktur zeigt Figur 3. Vergleicht man Figur 3 und Figur 2 so wird deutlich, dass die Poren in der β-SiC-Struktur durch aufgeschmolzenen in der Kohlenstruktur aufgesaugten Siliziumkörner entstanden sind. Die differentielle Porenverteilung dieser Struktur wurde mit Hilfe von Quecksilberporosimetrie, d.h. dem Quecksilberintrusionsverfahren, bestimmt und ist in Figur 4 dargestellt. Es ergibt sich eine sehr enge Porenverteilung zwischen 5 µm und 25 µm, wobei die mittlere Porengröße bei 12 µm liegt. Das Röntgenweitwinkelspektrum in Figur 7 zeigt ausschließlich die charakteristischen Peaks für β-SiC und keine Peaks für α-SiC. Es ist lediglich ein geringer Anteil von Restsilizium in einer Menge von maximal 5% vorhanden.

### Beispiel 2

Beispiel 2 entspricht Beispiel 1 außer, dass ein Siliziumpulver mit einem Korngrößenbereich von 0 bis 45 µm und einem d₅₀-Wert von 7,6 verwendet wurde. Anhand der Diagramme in Figur 5 und 6 kann man erkennen wie sich die Größenverteilung des Si-Pulvers auf die Porenverteilung überträgt.

## Patentansprüche

1. Verfahren zur Herstellung eines porösen β-SiC-haltigen keramischen Formkörpers,
**dadurch gekennzeichnet,**
**dass** das Verfahren die folgenden Schritte umfaßt:
(a) Bereitstellen eines porösen Silizium- und Kohlenstoff-haftigen Formkörpers, aus einer Masse, die Silizium-haltige Partikel vorzugsweise mit einer Korngröße aus einem Bereich von 0,001 bis 190 µm und Kohlenstoff-haltige Partikel vorzugsweise mit einer Korngröße aus einem Bereich von 0,001 bis 150 µm und ein verkokbares, organisches Bindemittel umfasst, wobei der Silizium- und Kohlenstoff-haltige Formkörper kein SiC enthält und der poröse Silizium und Kohlenstoff-haltige Formkörper in eine Kanäle-haltige Struktur extrudiert wird, wobei die Kanäle-haltige Struktur sich entlang der Längsachse des Formkörpers erstreckende Kanäle aufweist, die im wesentlichen parallel zueinander angeordnet sind,
(b) Pyrolysieren des in Schritt (a) bereitgestellten Silizium- und Kohlenstoffhaltigen Formkörpers bei einer Temperatur von 600 bis 1000°C,
(c) Silizieren des Silizium- und Kohlenstoff-haltigen Formkörpers durch Erhitzen auf eine Temperatur in einem Bereich von 1150 bis 1700°C unter Erhalt des β-SiC-haltigen Formkörpers mit einem dreidimensionalen durchgehenden β-SiC-Gerüst,
wobei die in Schritt (a) verwendeten Silizium-haltigen Partikel 1 bis 35 Gew.-%, Aluminium bezogen auf das Gewicht an Silizium, umfassen.

2. Verfahren nach Anspruch 1,
**dadurch gekennzeichnet,**
**dass** die Kohlenstoff-haltigen Partikel eine innere Oberfläche (BET) von mindestens 350 m²/g aufweisen.

3. Verfahren nach einem der vorhergehenden Ansprüche,
**dadurch gekennzeichnet,**
**dass** der in Schritt (b) bereitgestellte Silizium- und Kohlenstoff-haltige Formkörper ein Massenverhältnis von 2,33:1 bis 5:1 von Silizium zu Kohlenstoff aufweist.

4. Verfahren nach einem der vorhergehenden Ansprüche,
**dadurch gekennzeichnet,**
**dass** die Kanäle-haltige Struktur eine Kanaldichte von 50 bis 400 Kanäle/inch² aufweist.

5. Verfahren nach einem der vorhergehenden Ansprüche,
**dadurch gekennzeichnet,**
**dass** die Kanalwände eine Dicke in einem Bereich von 100 µm bis 480 µm aufweisen.

6. Verfahren nach einem der vorhergehenden Ansprüche,
**dadurch gekennzeichnet,**
**dass** die Pyrolyse und/oder die Silizierung in inerter, Sauerstoff-freier Atmosphäre stattfindet.

7. Verfahren nach einem der vorhergehenden Ansprüche,
**dadurch gekennzeichnet,**
**dass** der nach Schritt (c) erhaltene SiC-haltige Formkörper einen Restgehalt an freiem nicht umgesetzten Silizium von maximal 20 Gew.-%, bezogen auf das Gesamtgewicht des Formkörpers, und/oder einen Restgehalt an freiem nicht umgesetzten Kohlenstoff van maximal 10 Gew.-%, bezogen auf das Gesamtgewicht des Formkörpers, aufweist.

8. Verfahren nach Anspruch 7,
**dadurch gekennzeichnet,**
**dass** der freie, nicht umgesetzte Kohlenstoff ganz oder teilweise aus Kohlenstofffasern besteht.

9. Verfahren nach einem der vorhergehenden Ansprüche,
**dadurch gekennzeichnet,**
**dass** der in Schritt (a) bereitgestellte Silizium- und Kohlenstoff-haltige Formkörper Polymerfasern enthält.

10. Verfahren nach einem der vorhergehenden Ansprüche,
**dadurch gekennzeichnet,**
**dass** die Kohlenstoff-haftigen Partikel aus der Gruppe, die aus Aktivkohle, Koks, Kohle, Ruß, Graphit, pyrolysiertem Harz und Mischungen davon besteht, ausgewählt sind.

11. Verfahren nach einem der vorhergehenden Ansprüche,
**dadurch gekennzeichnet,**
**dass** die Kohlenstoff-haltigen Partikel biomorphen Kohlenstoff umfassen oder daraus bestehen.

12. Verfahren nach Anspruch 11,
**dadurch gekennzeichnet,**
**dass** der biomorphe Kohlenstoff aus Ausgangsmaterialien hergestellt ist, die aus der Gruppe bestehend aus Holz, Fruchtkernen, Fruchtschalen, und Mischungen davon, ausgewählt sind.

13. Verfahren nach Anspruch 11 oder 12,
**dadurch gekennzeichnet,**
**dass** der biomorphe Kohlenstoff säureaktiviert ist.

14. Verfahren nach einem der vorhergehenden Ansprüche,
**dadurch gekennzeichnet,**
**dass** die in Schritt (a) verwendeten Silizium-haltigen Partikel weitere Metalle umfassen, die vorzugsweise Sifizid- und/oder Carbidbildner sind.

15. Verfahren nach einem der vorhergehenden Ansprüche,
**dadurch gekennzeichnet,**
**dass** die in Schritt (a) verwendeten Silizium-haltigen Partikel weitere Metalle umfassen, die aus der Gruppe, die aus Mo, Fe, Ti, Cr, Ni, Cr, Mg, Cu, Co, Mn, Gemischen und Legierungen davon besteht, ausgewählt werden.

16. Verfahren nach Anspruch 14 oder 15,
**dadurch gekennzeichnet,**
**dass** der Anteil der weiteren Metalle insgesamt 1 bis 90 Gew.-%, bezogen auf das Gewicht an Silizium, beträgt.

17. Verfahren nach Anspruch 15,
**dadurch gekennzeichnet,**
**dass** der Anteil von Titan 5 bis 90 Gew.-%, bezogen auf das Gewicht an Silizium, beträgt.

18. Verfahren nach einem der vorhergehenden Ansprüche,
**dadurch gekennzeichnet,**
**dass** die Silizium-haltigen Partikel organische und/oder anorganische Siliziumverbindungen sind.

19. Poröser β-SiC-haltiger keramischer Partikelfilter,
**dadurch gekennzeichnet,**
**dass** der poröse β-SiC-haltige keramische Partikelfilter, mit einer Porosität von 20 bis 90 %, Poren mit einer mittleren Porengröße im Bereich von 0,1 µm bis zu 50 µm, ein dreidimensionales, durchgehendes β -SiC-Gerüst und eine Kanäle-haltige Struktur aufweist, wobei sich durch den Partikelfilter im wesentlichen parallel zueinander angeordnete Kanäle erstrecken, die wechselseitig verschlossen sind,
wobei die Matrix des keramischen Partikelfilters eine im wesentlichen aus SiC und etwaig nicht umgesetztem Kohlenstoff bestehende Skelettstruktur ist,
wobei der β-SiC-haltige Partikelfilter Aluminiumoxid, enthält, wobei der β-SiC-haltige Partikelfitter neben SiC auch Phasen aus oder mit Eisensilizid(en), vorzugsweise FeSi₂ und/oder FeSi, Chromsilizid(en), vorzugsweise CrSi₂, und/oder Titansilizid(en), vorzugsweise TiSi₂, Ti₃Si₅ und/oder TiC₂Si₃, und/oder Cobaltsilizid(en), vorzugsweise CoSi₂, Co₂Si und/oder CoSi, umfaßt.

20. Poröser β-SiC-haltiger keramischer Partikelfilter nach Anspruch 19,
**dadurch gekennzeichnet,**
**dass** der poröse β-SiC-haltige keramische Partikelfilter eine Porosität in einem Bereich von 30% bis 65 % aufweist.

21. Poröser β-SiC-haltiger keramischer Partikelfilter nach Anspruch 19 oder 20,
**dadurch gekennzeichnet,**
**dass** der poröse β-SiC-haltige keramische Partikelfilter eine differentielle Porengrößenverteitung mit einem unimodalen Peak mit einem Maximum im Bereich von 1 bis 25 µm aufweist und die Breite dieses Peaks bei seiner halben Höhe vorzugsweise maximal das 1,5-fache der häufigsten Porengröße beträgt.

22. Poröser β-SiC-haltiger keramischer Partikelfilter nach einem der Ansprüche 19 bis 21,
**dadurch gekennzeichnet,**
**dass** der poröse β-SiC-haltige keramische Partikelfilter eine Kanäle-haltige Struktur mit einer Kanaldichte von 50 bis 400 Kanälen/inch² aufweist.

23. Poröser β-SiC-haltiger keramischer Partikelfilter nach einem der Ansprüche 19 bis 22,
**dadurch gekennzeichnet,**
**dass** der poröse β-SiC-haltige keramische Partikelfilter Kanäle mit Kanalwänden mit einer Dicke in einem Bereich von 100 µm bis 480 µm aufweist.

24. Poröser β-SiC-haltiger keramischer Partikelfilter nach einem der Ansprüche 19 bis 23,
**dadurch gekennzeichnet,**
**dass** der Silizium- und Kohlenstoff-haltige Formkörper aus dem der poröse β-SiC-haltige keramische Partikelfilter hergestellt ist, vorzugsweise unter nichtoxidierenden Bedingungen, pyrolysiert und/oder siliziert ist.

25. Poröser β-SiC-haltiger keramischer Partikelfilter nach einem der Ansprüche 19 bis 24,
**dadurch gekennzeichnet,**
**dass** der β-SiC-haltige keramische Partikelfilter eine poröse Matrix aufweist, die SiC, SiC/C, Si/SiC und/oder Si/SiC/C umfaßt oder daraus besteht.

26. Poröser β-SiC-haltiger keramischer Partikelfilter nach einem der Ansprüche 19 bis 25,
**dadurch gekennzeichnet,**
**dass** die im wesentlichen aus SiC und etwaig nicht umgesetztem Kohlenstoff bestehende Skelettstruktur an der Oberfläche Si und/oder SiC aufweist.

27. Poröser β-SiC-haltiger keramischer Partikelfilter nach einem der Ansprüche 19 bis 26,
**dadurch gekennzeichnet,**
**dass** der β-SiC-haltige Partikelfilter faserverstärkt ist.

28. Poröser β-SiC-haltiger keramischer Partikelfilter nach Anspruch 27,
**dadurch gekennzeichnet,**
**dass** der β-SiC-haltige Partikelfilter durch Kohlenstofffasern verstärkt ist.

29. Poröser β-SiC-haltiger keramischer Partikelfilter nach einem der Ansprüche 19 bis 28,
**dadurch gekennzeichnet,**
**dass** der β-SiC-haltige Partikelfilter gerichtete oder lineare Porenstrukturen aufweist.

30. Poröser β-SiC-haltiger keramischer Partikelfilter nach einem der Ansprüche 19 bis 29,
**dadurch gekennzeichnet,**
**dass** der β-SiC-haltige Partikelfiltereine quaderförmige oder zylindrische Formgebung aufweist, wobei sich durch den Partikelfilter im wesentlichen parallel zueinander angeordnete Kanäle erstrecken, die vorzugsweise nicht durchgehend sind.

31. Poröser β-SiC-haltiger keramischer Partikelfilter nach einem der Ansprüche 19 bis 30,
**dadurch gekennzeichnet,**
**dass** der Partikelfilter aus mehreren Teilen besteht, die durch einen Klebstoff verbindbar oder verbunden sind.

32. Poröser β-SiC-haltiger keramischer Partikelfilter nach Anspruch 31,
**dadurch gekennzeichnet,**
**dass** der Klebstoff ein keramischer Feuerfestkleber ist, der durch Zumischung von thermisch hochleitfähigem Material eine Wärmeleitfähigkeit von mehr als 10 W/mK aufweist.

33. Kraftfahrzeugabgassystem,
**dadurch gekennzeichnet,**
**dass** es einen porösen β-SiC-haltigen keramischen Partikelfilter nach einem der Ansprüche 19 bis 32 enthält.

## Claims

1. Method to produce a porous ceramic mould containing β-SiC,
**characterised in that**,
the method comprises the following steps:
a provision of a porous mould containing silicon and carbon, made from a mass, which comprises particles containing silicon, preferably having a particle size ranging from 0.001 to 190 µm, and particles containing carbon, preferably having a particle size ranging from 0.001 to 150 µm, and an organic binding agent that is able to be coked, wherein the mould containing silicon and carbon does not contain SiC and the porous mould containing silicon and carbon is extruded into a structure containing channels, wherein the structure containing channels has channels which extend along the longitudinal axis of the mould and which are arranged fundamentally in parallel to one another,
b pyrolysis of the mould containing silicon and carbon provided in step (a) at a temperature from 600 to 1000 °C,
c siliconization of the mould containing silicon and carbon by heating to a temperature ranging from 1150 to 1700 °C, obtaining a mould containing β-SiC having a three-dimensional, continuous β-SiC framework,
wherein the particles containing silicon used in step (a) comprise 1 to 35 % b.w. aluminium with regard to the weight of silicon.

2. Method according to claim 1,
**characterised in that**,
the particles containing carbon have an inner surface (BET) of at least 350 m² /g.

3. Method according to one of the preceding claims,
**characterised in that**,
the mould containing silicon and carbon provided in step (b) has a mass ratio of 2.33:1 of silicon to carbon.

4. Method according to one of the preceding claims,
**characterised in that**,
the structure containing channels has a channel density of 50 to 400 channels/inch².

5. Method according to one of the preceding claims,
**characterised in that**,
the channel walls have a thickness ranging from 100µm to 480µm.

6. Method according to one of the preceding claims,
**characterised in that**,
the pyrolysis and/or the siliconization takes place in an inert atmosphere that does not contain oxygen.

7. Method according to one of the preceding claims,
**characterised in that**,
the mould containing SiC obtained according to step (c) has a residual content of free, unreacted silicon of a maximum of 20 % b.w. with regard to the total weight of the mould, and/or a residual content of free, unreacted carbon of a maximum of 10% b.w. with regard to the total weight of the mould.

8. Method according to claim 7,
**characterised in that**,
the free, unreacted carbon consists completely or partially of carbon fibres.

9. Method according to one of the preceding claims,
**characterised in that**,
the mould containing silicon and carbon provided in step (a) contains polymer fibres.

10. Method according to one of the preceding claims,
**characterised in that**,
the particles containing carbon are selected from the group, which consists of activated carbon, coke, coal, soot, graphite, pyrolyzed resin and mixtures thereof.

11. Method according to one of the preceding claims,
**characterised in that**,
the particles containing carbon comprise or consist of biomorphic carbon.

12. Method according to claim 11,
**characterised in that**,
the biomorphic carbon is produced from raw materials, which are selected from the group consisting of wood, fruit stones, fruit peel and mixtures thereof.

13. Method according to claim 11 or 12,
**characterised in that**,
the biomorphic carbon is acid-activated.

14. Method according to one of the preceding claims,
**characterised in that**,
the particles containing silicon used in step (a) comprise further metals, which are preferably silicide and/or carbide formers.

15. Method according to one of the preceding claims,
**characterised in that**,
the particles containing silicon used in step (a) comprise further metals, which are selected from the group, which consists of Mo, Fe, Ti, Cr, Ni, Cr, Mg, Cu, Co, Mn, mixtures and alloys thereof.

16. Method according to claim 14 or 15,
**characterised in that**,
the proportion of further metals amounts in total to 1 to 90 % b.w. with regard to the weight of silicon.

17. Method according to claim 15,
**characterised in that**,
the proportion of titanium amounts to 5 to 90 % b.w. with regard to the weight of silicon.

18. Method according to one of the preceding claims,
**characterised in that**,
the particles containing silicon are organic and/or inorganic silicon compounds.

19. Porous ceramic particle filter containing β-SiC,
**characterised in that**,
the porous ceramic particle filter containing β-SiC with a porosity of 20 to 90% has pores having an average pore size ranging from 0.1 µm to 50 µm, a three-dimensional, continuous β-SiC frame and a structure containing channels, wherein channels that are arranged fundamentally in parallel to one another extend through the particle filter, said channels being closed alternately,
wherein the matrix of the ceramic particle filter is a skeleton structure consisting substantially of SiC and any unreacted carbon,
wherein the particle filter containing β-SiC contains aluminium oxide, wherein the particle filter containing β-SiC also comprises, besides SiC, phases made from or with iron silicide(s), preferably FeSi and/or FeSi, chrome 2 silicide(s), preferably CrSi and/or titanium 2, silicide(s), preferably TiSi , Ti Si and/or TiC Si, 2 3 5 2 3 and/or cobalt silicide(s), preferably CoSi , Co Si and/or 2 2 CoSi.

20. Porous ceramic particle filter containing β-SiC according to claim 19,
**characterised in that**,
the porous ceramic particle filter containing β-SiC has a porosity ranging from 30% to 65%.

21. Porous ceramic particle filter containing β-SiC according to claim 19 or 20,
**characterised in that**,
the porous ceramic particle filter containing β-SiC has a differential pore size distribution having a unimodal peak with a maximum ranging from 1 to 25 µm and the width of this peak at half of its height preferably amounts to a maximum of 1.5 times the most frequent pore size.

22. Porous ceramic particle filter containing β-SiC according to one of claims 19 to 21,
**characterised in that**,
the porous ceramic particle filter containing β-SiC has a structure containing channels having a channel density of 50 to 400 channels/inch².

23. Porous ceramic particle filter containing β-SiC according to one of claims 19 to 22,
**characterised in that**,
the porous ceramic particle filter containing β-SiC has channels with channel walls having a thickness ranging from 100µm to 480µm.

24. Porous ceramic particle filter containing β-SiC according to one of claims 19 to 23.
**characterised in that**,
the mould containing silicon and carbon, from which the porous ceramic particle filter containing β-SiC is produced, is pyrolyzed and/or siliconized preferably under non-oxidising conditions.

25. Porous ceramic particle filter containing β-SiC according to one of claims 19 to 24,
**characterised in that**,
the ceramic particle filter containing β-SiC has a porous matrix, which comprises or consists of SiC, SiC/C, Si/SiC and/or Si/SiC/C.

26. Porous ceramic particle filter containing β-SiC according to one of claims 19 to 25,
**characterised in that**,
the skeleton structure consisting fundamentally of SiC and any unreacted carbon has Si and/or SiC on the surface.

27. Porous ceramic particle filter containing β-SiC according to one of claims 19 to 26,
**characterised in that**,
the particle filter containing β-SiC is fibre-reinforced.

28. Porous ceramic particle filter containing β-SiC according to claim 27.
**characterised in that**,
the particle filter containing β-SiC is reinforced by carbon fibres.

29. Porous ceramic particle filter containing β-SiC according to one of claims 19 to 28,
**characterised in that**,
the particle filter containing β-SiC has directed or linear pore structures.

30. Porous ceramic particle filter containing β-SiC according to one of claims 19 to 29,
**characterised in that**,
the particle filter containing β-SiC has a cuboidal or cylindrical shape, wherein channels that are arranged fundamentally in parallel to one another extend through the particle filter, said channels preferably not being continuous.

31. Porous ceramic particle filter containing β-SiC according to one of claims 19 to 30,
**characterised in that**,
the particle filter consists of several parts, which are able to be connected or are connected by an adhesive.

32. Porous ceramic particle filter containing β-SiC according to claim 31,
**characterised in that**,
the adhesive is a ceramic fire-resistant adhesive, which has a thermal conductivity of more than 10 W/mK due to the addition of highly thermally conductive material.

33. Motor vehicle exhaust gas system,
**characterised in that**,
it contains a porous ceramic particle filter containing β-SiC according to one of claims 19 to 32.

## Revendications

1. Procédé de fabrication d'un corps moulé céramique poreux contenant du β-SiC, **caractérisé en ce que** le procédé comprend les étapes suivantes :
(a) mise à disposition d'un objet moulé poreux contenant du silicium et du carbone, à partir d'une masse qui comprend des particules contenant du silicium, ayant de préférence une granulométrie comprise dans la plage de 0,001 à 190 µm, et des particules contenant du carbone, ayant de préférence une granulométrie comprise dans la plage de 0,001 à 150 µm, et un liant organique cokéfiable, le corps moulé contenant du silicium et du carbone ne contenant pas de SiC, et le corps moulé poreux contenant du silicium et du carbone étant extrudé en une structure contenant des canaux, la structure contenant des canaux présentant des canaux s'étendant le long de l'axe longitudinal du corps moulé, qui sont disposés pour l'essentiel parallèlement les uns aux autres,
(b) pyrolyse du corps moulé contenant du silicium et du carbone, mis à disposition dans l'étape (a), à une température de 600 à 1000°C,
(c) siliciation du corps moulé contenant du silicium et du carbone, par chauffage à une température comprise dans la plage de 1150 à 1700°C, avec obtention du corps moulé contenant du β-SiC, comportant une charpente de β-SiC tridimensionnelle continue,
les particules contenant du silicium utilisées dans l'étape (a) comprenant 1 à 35 % en poids d'aluminium par rapport au poids du silicium.

2. Procédé selon la revendication 1, **caractérisé en ce que** les particules contenant du carbone présentent une aire interne (BET) d'au moins 350 m²/g.

3. Procédé selon l'une des revendications précédentes, **caractérisé en ce que** le corps moulé contenant du silicium et du carbone mis à disposition dans l'étape (b) présente un rapport en masse de 2,33:1 à 5:1 du silicium au carbone.

4. Procédé selon l'une des revendications précédentes, **caractérisé en ce que** la structure contenant des canaux présente une densité de canaux de 50 à 400 canaux/inch².

5. Procédé selon l'une des revendications précédentes, **caractérisé en ce que** les parois des canaux présentent une épaisseur comprise dans la plage de 100 µm à 480 µm.

6. Procédé selon l'une des revendications précédentes, **caractérisé en ce que** la pyrolyse et/ou la siliciation ont lieu dans une atmosphère inerte sans oxygène.

7. Procédé selon l'une des revendications précédentes, **caractérisé en ce que** le corps moulé contenant du SiC, obtenu après l'étape (c), présente une teneur résiduelle en silicium libre n'ayant pas réagi d'au plus 20 % en poids par rapport au poids total du corps moulé, et/ou une teneur résiduelle en carbone libre n'ayant pas réagi d'au plus 10 % en poids par rapport au poids total du corps moulé.

8. Procédé selon la revendication 7, **caractérisé en ce que** le carbone libre n'ayant pas réagi est en totalité ou en partie constitué de fibres de carbone.

9. Procédé selon l'une des revendications précédentes, **caractérisé en ce que** le corps moulé contenant du silicium et du carbone mis à disposition dans l'étape (a) contient des fibres polymères.

10. Procédé selon l'une des revendications précédentes, **caractérisé en ce que** les particules contenant du carbone sont choisies dans le groupe consistant en le charbon actif, le coke, le charbon, le noir de carbone, le graphite, une résine pyrolysée, et les mélanges de ceux-ci.

11. Procédé selon l'une des revendications précédentes, **caractérisé en ce que** les particules contenant du carbone comprennent du carbone biomorphe ou en sont constituées.

12. Procédé selon la revendication 11, **caractérisé en ce que** le carbone biomorphe est fabriqué à partir de matériaux de départ qui sont choisis dans le groupe consistant en le bois, les noyaux de fruits, les coques de fruits et les mélanges de ceux-ci.

13. Procédé selon la revendication 11 ou 12, **caractérisé en ce que** le carbone biomorphe est activé par un acide.

14. Procédé selon l'une des revendications précédentes, **caractérisé en ce que** les particules contenant du silicium utilisées dans l'étape (a) comprennent des métaux supplémentaires, qui de préférence sont des générateurs de siliciure et/ou de carbure.

15. Procédé selon l'une des revendications précédentes, **caractérisé en ce que** les particules contenant du silicium utilisées dans l'étape (a) comprennent des métaux supplémentaires qui sont choisis dans le groupe consistant en Mo, Fe, Ti, Cr, Ni, Cr, Mg, Cu, Co, Mn, les mélanges et les alliages de ceux-ci.

16. Procédé selon la revendication 14 ou 15, **caractérisé en ce que** la proportion des métaux supplémentaires est en tout de 1 à 90 % en poids par rapport au poids du silicium.

17. Procédé selon la revendication 15, **caractérisé en ce que** la proportion du titane est de 5 à 90 % en poids par rapport au poids du silicium.

18. Procédé selon l'une des revendications précédentes, **caractérisé en ce que** les particules contenant du silicium sont des composés organiques et/ou inorganiques du silicium.

19. Filtre à particules céramique poreux contenant du β-SiC, **caractérisé en ce que** le filtre à particules céramique poreux contenant du β-SiC, ayant une porosité de 20 à 90 %, comporte des pores ayant une grosseur moyenne des pores comprise dans la plage de 0,1 µm à 50 µm, une charpente continue tridimensionnelle de β-SiC et une structure contenant des canaux, les canaux, disposés pour l'essentiel parallèlement les uns aux autres, et obturés en alternance, s'étendant à travers le filtre à particules,
la matrice du filtre à particules céramique étant une structure de squelette constituée pour l'essentiel de SiC et de carbone qui éventuellement n'a pas réagi,
le filtre à particules contenant du β-SiC contenant de l'oxyde d'aluminium, le filtre à particules contenant du β-SiC comprenant aussi, outre du SiC, des phases constituées d'un ou plusieurs siliciures de fer, de préférence FeSi₂ et/ou FeSi, d'un ou plusieurs siliciures de chrome, de préférence CrSi₂, et/ou d'un ou plusieurs siliciures de titane, de préférence TiSi₂, Ti₃Si₅ et/ou TiC₂Si₃, et/ou d'un ou plusieurs siliciures de cobalt, de préférence CoSi₂, Co₂Si et/ou CoSi, ou les contenant.

20. Filtre à particules céramique poreux contenant du β-SiC selon la revendication 19, **caractérisé en ce que** le filtre à particules céramique poreux contenant du β-SiC présente une porosité comprise dans la plage de 30 à 65 %.

21. Filtre à particules céramique poreux contenant du β-SiC selon la revendication 19 ou 20, **caractérisé en ce que** le filtre à particules céramique poreux contenant du β-SiC présente une distribution différentielle de la grosseur des pores ayant un pic unimodal présentant un maximum dans la plage de 1 à 25 µm, et la largeur de ce pic, à mi-hauteur, est de préférence au maximum égal à 1,5 fois la grosseur de pores la plus fréquente.

22. Filtre à particules céramique poreux contenant du β-SiC selon l'une des revendications 19 à 21, **caractérisé en ce que** le filtre à particules céramique poreux contenant du β-SiC présente une structure contenant des canaux, ayant une densité de canaux de 50 à 400 canaux/inch².

23. Filtre à particules céramique poreux contenant du β-SiC selon l'une des revendications 19 à 22, **caractérisé en ce que** le filtre à particules céramique poreux contenant du β-SiC présente des canaux ayant des parois de canaux présentant une épaisseur comprise dans la plage de 100 µm à 480 µm.

24. Filtre à particules céramique poreux contenant du β-SiC selon l'une des revendications 19 à 23, **caractérisé en ce que** le corps moulé contenant du silicium et du carbone à partir duquel est fabriqué le filtre à particules céramique poreux contenant du β-SiC est polymérisé et/ou silicié de préférence dans des conditions non oxydantes.

25. Filtre à particules céramique poreux contenant du β-SiC selon l'une des revendications 19 à 24, **caractérisé en ce que** le filtre à particules céramique contenant du β-SiC présente une matrice poreuse qui comprend du SiC, du SiC/C et/ou du Si/SiC/C, ou en est constituée.

26. Filtre à particules céramique poreux contenant du β-SiC selon l'une des revendications 19 à 25, **caractérisé en ce que** la structure de squelette constituée pour l'essentiel de SiC et éventuellement de carbone n'ayant pas réagi comprend du Si et/ou du SiC sur sa surface.

27. Filtre à particules céramique poreux contenant du β-SiC selon l'une des revendications 19 à 26, **caractérisé en ce que** le filtre à particules contenant du β-SiC est renforcé par des fibres.

28. Filtre à particules céramique poreux contenant du β-SiC selon la revendication 27, **caractérisé en ce que** le filtre à particules contenant du β-SiC est renforcé par des fibres de carbone.

29. Filtre à particules céramique poreux contenant du β-SiC selon l'une des revendications 19 à 28, **caractérisé en ce que** le filtre à particules contenant du β-SiC présente des structures de pores orientées ou linéaires.

30. Filtre à particules céramique poreux contenant du β-SiC selon l'une des revendications 19 à 29, **caractérisé en ce que** le filtre à particules contenant du β-SiC présente une forme parallélépipédique ou cylindrique, des canaux disposés pour l'essentiel parallèlement les uns aux autres, qui de préférence ne sont pas continus, s'étendant à travers le filtre à particules.

31. Filtre à particules céramique poreux contenant du β-SiC selon l'une des revendications 19 à 30, **caractérisé en ce que** le filtre à particules est constitué de plusieurs parties, qui sont assemblées ou peuvent être assemblées à l'aide d'un adhésif.

32. Filtre à particules céramique poreux contenant du β-SiC selon la revendication 31, **caractérisé en ce que** l'adhésif est un adhésif résistant au feu, qui sous l'effet d'un mélange avec un matériau ayant une grande conductibilité thermique, présente une conductibilité thermique supérieure à 10 W/m.

33. Système de traitement des gaz d'échappement d'un véhicule à moteur, **caractérisé en ce qu'**il contient un filtre à particules céramique poreux contenant du β-SiC selon l'une des revendications 19 à 32.
